# EUROPÄISCHE PATENTSCHRIFT

(11) **EP 3 752 346 B1**
(45) Veröffentlichungstag und Bekanntmachung des Hinweises auf die Patenterteilung: **27.08.2025**
(21) Anmeldenummer: 19708480.9
(22) Anmeldetag: 28.02.2019
(51) Int. Cl.: B29C 64/386, B29C 64/393, B22F 10/80, B22F 10/366, B29C 67/00, B33Y 50/02, B22F 3/105

(54) **SELEKTIVE NACHBELICHTUNG**
SELECTIVE POSTEXPOSURE
POST-EXPOSITION SELECTIVE

(30) Priorität: 17.04.2018 DE 102018205820
(43) Veröffentlichungstag der Anmeldung: 23.12.2020
(73) Patentinhaber: EOS GmbH Electro Optical Systems, 82152 Krailling (DE)
(72) Erfinder: PATERNOSTER, Stefan, 82346 Andechs (DE)
(74) Vertreter: Prüfer & Partner mbB Patentanwälte · Rechtsanwälte
(86) Internationale Anmeldenummer: PCT/EP2019/054945
(87) Internationale Veröffentlichungsnummer: WO 2019/201498

(56) Entgegenhaltungen:
- EP-A1- 3 305 444
- DE-A1- 10 157 647
- FR-A1- 2 987 293

## Beschreibung

Die Erfindung betrifft ein Verfahren und eine Vorrichtung zur Bereitstellung von Steuerdaten für eine additive Herstellvorrichtung, ein entsprechend angepasstes additives Herstellverfahren, eine entsprechende Vorrichtung zur Ansteuerung einer Energieeintragseinrichtung einer additiven Herstellvorrichtung, eine entsprechend angepasste additive Herstellvorrichtung und ein entsprechend angepasstes Computerprogramm.

Additive Herstellvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise durch Zufuhr von Wärmeenergie zum Aufbaumaterial mittels Bestrahlens desselben mit elektromagnetischer Strahlung oder Teilchenstrahlung (z.B. Lasersintern (Selektives Lasersintern oder Direktes Metall-Lasersintern) oder Laserschmelzen oder Elektronenstrahlschmelzen) herbeigeführt werden. Beispielsweise beim Lasersintern oder Laserschmelzen wird der Auftreffbereich eines Laserstrahls auf eine Schicht des Aufbaumaterials über jene Stellen der Schicht bewegt, die dem Objektquerschnitt des herzustellenden Objekts in dieser Schicht entsprechen.

FR 2 987 293 beschreibt ein additives Herstellverfahren, bei dem ein metallhaltiges Pulver an Stellen, die einem Abschnitt des Objekts entsprechen, mit einem Laer aufgeschmolzen wird. Mit Hilfe eines Elektronenstrahls wird ein Teil der aufgeschmolzenen Schicht erneut bestrahlt, um den Zustand der verschmolzenen Schicht zu modifizieren und eine verfestigte Schicht mit verbesserten mechanischen Eigenschaften zu erhalten.

EP 3 305 444 A1 beschreibt ein Verfahren zum Herstellen einer mechanischen Komponente mittels eines additiven Herstellverfahrens aus einem metallhaltigen Pulver. Dabei wird nach dem Verfestigen einer Pulverschicht, ein Teil der verfestigten Pulverschicht annealt, indem er auf eine Temperatur unterhalb der Schmelztemperatur des Materials gebracht wird.

DE 101 57 647 A1 beschreibt ein Verfahren zur Herstellung von dreidimensionalen Werkstücken in einer Laser-Materialbearbeitungsanlage oder Stereolithographieanlage, wobei lagenweise Sintermaterial oder pastoses Material auf eine Unterlage aufgetragen und durch bereichsweise Bestrahlung mit Laserstrahlung selektiv verfestigt werden. Während oder nach dem Werkstückherstellungsprozess werden Bereiche des Werkstückes durch den Laser unter Erhöhung seiner Energiedichte aufgeschmolzen oder abgetragen.

Die internationale Offenlegungsschrift WO 2008/145316 A2 nennt verschiedene Probleme, die bei einer additiven Herstellung von Objekten, insbesondere einem Laser-sinterverfahren, zu bewältigen sind. Zum einen ist das Verfahren zeitaufwendig, da alle zu verfestigenden Stellen einzeln mit dem Laser angefahren werden müssen. Weiterhin ist ein energiereicher Laser kostspielig in Anschaffung und Wartung. Schließlich führen hohe Laserenergien dazu, dass aufwändige Kühllösungen für den Laser und die Strahlablenkeinrichtungen gefunden werden müssen. WO 2008/145316 A2 schlägt vor, den für eine verfestigende Abtastung des Aufbaumaterials notwendigen Energiebetrag dadurch zu verringern, dass das Absorptionsvermögen des Aufbaumaterials durch eine Abtastung mit Laserstrahlung vor dem Verfestigen erhöht wird. Insbesondere wird vorgeschlagen, die für eine Verfestigung notwendige Energie dem Aufbaumaterial flächenhaft mittels eines Flächenheizstrahlers zuzuführen.

Die flächenhafte Zufuhr der für eine Verfestigung des Aufbaumaterials notwendigen Energie erlaubt es nur sehr eingeschränkt, den Energieeintrag innerhalb des zu verfestigenden Bereichs zu variieren. Unterschiedliche Objektgeometrien können es aber erforderlich machen, nicht alle Stellen des Objektquerschnitts bei der Verfestigung gleich zu behandeln. Die Aufgabe der vorliegenden Erfindung ist es daher, ein Verfahren und eine Vorrichtung bereit zu stellen, mittels derer bei der additiven Herstellung von Objekten gezielt auf unterschiedliche lokale Erfordernisse eingegangen werden kann.

Die Aufgabe wird gelöst durch ein computergestütztes Verfahren zur Bereitstellung von Steuerdaten nach Anspruch 1, ein additives Herstellverfahren nach Anspruch 9, eine Vorrichtung zur Bereitstellung von Steuerdaten nach Anspruch 10, eine Vorrichtung zur Ansteuerung einer Energieeintragseinrichtung nach Anspruch 11, eine additive Herstellvorrichtung nach Anspruch 12 und ein Computerprogramm nach Anspruch 15. Weiterbildungen der Erfindung werden in den abhängigen Ansprüchen beansprucht. Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt. Ferner können die im Zusammenhang mit einer Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes computergestütztes Verfahren zur Bereitstellung von Steuerdaten für eine additive Herstellvorrichtung zur Herstellung einer Anzahl von dreidimensionalen Objekten, wobei die Objekte mittels der additiven Fertigungsvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, weist auf:
einen ersten Schritt des Zugriffs auf computerbasierte Modelldaten einer Anzahl von Abschnitten der Anzahl von herzustellenden Objekten,
einen zweiten Schritt, in dem eine Anzahl von Datenmodellen generiert wird, in denen jeweils für eine Aufbaumaterialschicht ein während der Herstellung der Anzahl von Abschnitten zu verfestigender Bereich der Aufbaumaterialschicht spezifiziert ist, wobei der zu verfestigende Bereich in einen ersten Teilbereich und einen zweiten Teilbereich unterteilt ist,
wobei in einem Datenmodell jeweils eine das Aufbaumaterial verfestigende Verfestigungs-Abtastung der Stellen in dem zu verfestigenden Bereich mittels der Energieeintragseinrichtung spezifiziert ist und an den Stellen des zweiten Teilbereichs, nicht aber an den Stellen des ersten Teilbereichs, eine Wiederholungs-Abtastung mit zumindest einem Strahlbündel spezifiziert ist, wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, bevorzugt innerhalb des Schmelzintervalls des Aufbaumaterials oder darüber, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt, und
einen dritten Schritt, in dem im zweiten Schritt generierte Datenmodelle als Steuerdaten für die Integration in einen Steuerdatensatz der additiven Herstellvorrichtung bereitgestellt werden.

Additive Herstellvorrichtungen und -verfahren, auf die sich die vorliegende Erfindung bezieht, sind insbesondere solche, bei denen Energie als elektromagnetische Strahlung oder Teilchenstrahlung selektiv einer Schicht des Aufbaumaterials zugeführt wird. Die Strahlung trifft dabei in einer Arbeitsebene auf das Aufbaumaterial, die in der Regel eine Ebene ist, in der die Oberseite (also die der Energieeintragseineinrichtung zugewandte Seite) der Schicht liegt, welcher die Energie zugeführt wird. Hierbei kann eine Energieeintragseinrichtung beispielsweise einen Laser oder eine Elektronenstrahlquelle aufweisen, wobei ein Laser aufgrund des verwendeten Aufbaumaterials im Rahmen der vorliegenden Erfindung bevorzugt ist. Insbesondere bezieht sich die Erfindung auf Verfahren und Vorrichtungen, bei denen dem Aufbaumaterial mittels Strahlung Wärme zugeführt wird, wie z.B. das Lasersintern oder Laserschmelzen bzw. Elektronenstrahlschmelzen.

Wenn in dieser Anmeldung von unterhalb oder oberhalb eines Objekt(abschnitts)querschnitts vorhandenen Schichten die Rede ist, dann bezieht sich diese Richtungsangabe auf eine Richtung, die im Wesentlichen senkrecht auf den Schichtebenen steht bzw. senkrecht zur Arbeitsebene liegt. Der Begriff "im Wesentlichen" bringt hier zum Ausdruck, dass die Schichtdicke in manchen Fällen nicht einheitlich sein kann, z. B. die Schichtdicke sich über den Objektquerschnitt hinweg ändern kann. Es wird in diesem Zusammenhang angenommen, dass untenliegende Schichten zeitlich vor den darüberliegenden Schichten aufgetragen werden und daher unterhalb der darüberliegenden Schichten angeordnet sind.

Es sei an dieser Stelle auch bemerkt, dass mittels einer additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines oder mehrerer herzustellender Objekt(abschnitt)e entsprechen, mit Strahlung abzutasten, um das Aufbaumaterial zu verfestigen.

Im Detail basiert ein Steuerdatensatz auf einem computerbasierten Modell des oder der herzustellenden Objekte bzw. Objektabschnitte, bevorzugt einem CAD-Modell. Der Steuerdatensatz legt für Aufbaumaterialschichten während der additiven Herstellung von Objekten die Stellen fest, an denen durch Strahlungszufuhr eine Verfestigung des Aufbaumaterials bewirkt werden soll. Optional wird auch die Dicke der jeweiligen Aufbaumaterialschicht vorgegeben. Ein Steuerdatensatz kann darüberhinaus noch herstellvorrichtungsspezifische Informationen, beispielsweise bezüglich der Lage und Orientierung der Objekte in der additiven Herstellvorrichtung oder aber bezüglich eines Durchmessers eines Auftreffbereichs eines Strahl(bündel)s auf dem Aufbaumaterial enthalten. Oftmals enthält ein Steuerdatensatz auch zur Steuerung einer Energieeintragseinrichtung erforderliche Daten, durch welche z.B. die Strahlungsleistung pro Flächeneinheit und/oder die Verfahrgeschwindigkeit des Strahlbündels über das Aufbaumaterial und/oder ein Bestrahlungsmuster festgelegt werden. Hier wird der Begriff "Strahlbündel" anstelle von "Strahl" verwendet, um zum Ausdruck zu bringen, dass der Durchmesser des Auftreffbereichs der Strahlung auf dem Aufbaumaterial nicht notwendigerweise sehr klein sein muss, sondern auch eine größere Fläche einnehmen kann, insbesondere wenn die Strahlung schräg auf das Aufbaumaterial auftrifft oder aber Strahlung verwendet wird, die beim Auftreffen auf das Aufbaumaterial bewusst einen größeren Flächenbereich abdecken soll (beispielsweise wenn ein Zeilenbelichter zum Einsatz kommt).

Auf eine einzelne Schicht bezogene Steuerdaten werden im Folgenden auch als Schichtdatensatz bezeichnet. **In** der vorliegenden Anmeldung wird insbesondere angenommen, dass ein Schichtdatensatz ein Datenmodell von während des Herstellungsverfahrens zu verfestigenden Stellen eines Querschnitts eines oder mehrerer Objekt(abschnitt)e enthält. Solch ein Datenmodell wird in der Regel durch Zerlegen eines CAD-Modells der jeweiligen herzustellenden Objekt(abschnitt)e in Schichten erzeugt (im Fachjargon als Slicing bezeichnet). Es ist aber auch denkbar, eine zweidimensionale Repräsentation des/der in einer Schicht mittels eines oder mehrerer Strahlenbündel zu verfestigenden Objektquerschnitts/Objektquerschnitte auf anderweitige Weise aus dem computerbasierten CAD-Modell des Objekts/der Objekte zu extrahieren.

**In** dem Schichtdatensatz sind einem Querschnitt durch eines oder mehrere Objekte entsprechende Stellen, die in der zugehörigen Aufbaumaterialschicht zu verfestigen sind, spezifiziert. Darüber hinaus können noch weitere Informationen hinsichtlich der Herstellung des Objektquerschnitts bzw. der Objektabschnittsquerschnitte enthalten sein, insbesondere die zeitliche Reihenfolge, in der einem Objekt(abschnitts)querschnitt entsprechende Stellen zu verfestigen sind, also eine Scanlinie bzw. eine Abtastspur, entlang derer verfestigt werden soll. Weiterhin können auch z. B. die Schichtdicke oder Bestrahlungsparameterwerte, wie beispielsweise der Durchmesser oder die Verfahrgeschwindigkeit eines Auftreffbereichs eines Strahlbündels auf dem Aufbaumaterial, etc. spezifiziert sein. Es sei betont, dass es Fälle gibt, in denen sich ein Schichtdatensatz nicht auf einen kompletten Objektquerschnitt bezieht, sondern nur auf einen Teil desselben.

Bei den computerbasierten Modelldaten kann es sich beispielsweise um ein Modell eines oder mehrerer herzustellender Objektabschnitte handeln, das z. B. als CAD-Modell oder konvertiert in das STL-Format vorliegt, und noch keine Informationen über die Zerlegung in Schichten für eine schichtweise Herstellung enthält. Denkbar ist auch ein Vorliegen der Modelldaten in einer GML(Generative Modelling Language)-Beschreibung. Alternativ kann es sich bei den Modelldaten um eine Anzahl von Schichtdatensätzen handeln, von denen jeder ein Datenmodell eines während der Herstellung selektiv zu verfestigenden Bereichs einer Aufbaumaterialschicht aufweist, der einem Querschnitt des Objektabschnitts/der Objektabschnitte entspricht. An dieser Stelle sei vermerkt, dass in der vorliegenden Anmeldung der Begriff "Anzahl" stets im Sinne von "ein oder mehrere" zu verstehen ist. Ferner sei bemerkt, dass der Begriff "Objektabschnitt" sich nicht notwendigerweise nur auf einen Teil eines herzustellenden Objekts beziehen muss, sondern auch das ganze herzustellende Objekt umfassen kann.

Ein Zugriff auf die Modelldaten kann so aussehen, dass die Modelldaten aus einem Speicher ausgelesen werden oder aber über ein Netzwerk entgegengenommen werden. Dabei müssen die Modelldaten eines gesamten Objektabschnitts nicht zwangsläufig auf einmal eingelesen werden. Es ist auch möglich, dass es einen größeren zeitlichen Abstand zwischen den Zugriffsvorgängen auf Teile der Modelldaten gibt, beispielsweise Teile der Modelldaten jeweils bei Bedarf während eines Herstellungsvorgangs eines Objektabschnitts aus einem Speicher (auf den z.B. auch von Seiten der additiven Herstellvorrichtung aus zugegriffen werden kann) eingelesen werden und ein erzeugtes Datenmodell dann während des Herstellungsvorgangs in den Steuerdatensatz integriert wird. Eine additive Herstellvorrichtung kann also unter Zugrundelegung des erfindungsgemäßen Verfahrens den Steuerdatensatz für ihre Ansteuerung selbst generieren/abändern.

Insbesondere wenn die Modelldaten, auf die im ersten Schritt zugegriffen wird, bereits eine Anzahl von Schichtdatensätzen aufweisen, kann die Generierung zumindest eines Datenmodells im zweiten Schritt in der Abänderung einer bereits in den Modelldaten vorhandenen Anzahl von Datenmodellen bestehen. Andernfalls kann ein Datenmodell einer Aufbaumaterialschicht (bzw. eines Teils davon) erstmalig im zweiten Schritt erzeugt werden.

Durch die Erzeugung eines Datenmodells im zweiten Schritt ist jeder in der zugehörigen Aufbaumaterialschicht zu verfestigenden Stelle der Anzahl von Abschnitten der Anzahl von Objekten ein Wert zumindest eines Energieeintragsparameters zugewiesen. Mögliche Energieeintragsparameter in dem Satz von Energieeintragsparametern sind die Energiedichte, also die Strahlungsenergiemenge pro Flächeneinheit eines auf das Aufbaumaterial zur Verfestigung desselben gerichteten Strahlbündels, die Ausgangsleistung der Strahlungsquelle, die zur Erzeugung des Strahlbündels dient (z. B. einer (Pump-)Laserquelle), die Strahlungsintensität in einem auf das Aufbaumaterial zur Verfestigung desselben gerichteten Strahlbündel, die lokale Verteilung der Energie pro Flächeneinheit oder Strahlungsleistung pro Flächeneinheit innerhalb des Auftreffbereichs des Strahlbündels auf dem Aufbaumaterial, die Bewegungsgeschwindigkeit eines Strahlbündels über das Aufbaumaterial, die Häufigkeit des Energieeintrags an einer Stelle, bei Verwendung eines Lasers als Strahlungsquelle die Pulsdauer und/oder -frequenz der Laserpulse, die Größe und Gestalt des Strahlungsauftreffbereichs auf dem Aufbaumaterial, etc. Ferner ist ein weiterer Energieeintragsparameter der Abstand zwischen zwei Stellen innerhalb einer Schicht, an denen Energie zeitlich aufeinanderfolgend eingetragen wird. Je kürzer der Abstand ist, desto größer ist die gegenseitige Beeinflussung der beiden Stellen.

Bei der im zweiten Schritt spezifizierten Verfestigungs-Abtastung wird dem Aufbaumaterial so viel Energie zugeführt, dass sich durch die resultierende Aufheizung des Aufbaumaterials die Bestandteile des Aufbaumaterials (beispielsweise Pulverkörner) miteinander verbinden und das Aufbaumaterial nach einer Abkühlung als Festkörper vorliegt. Bevorzugt wird infolge der Energiezufuhr eine Schmelztemperatur des Aufbaumaterials überschritten, wodurch der herzustellende Festkörper eine hohe mechanische Stabilität aufweist. Dabei sei erwähnt, dass insbesondere bei Aufbaumaterialien, die nur in teilkristalliner Form vorliegen, der Schmelzvorgang innerhalb eines Temperaturintervalls (dem Schmelzintervall) stattfindet. In der Regel gilt, dass die mechanischen Eigenschaften der hergestellten Objekte umso besser sind, je höher die Temperatur bei der Abtastung liegt. Daher werden die Energieeintragsparameter bei der Verfestigungs-Abtastung so bemessen, dass die Temperatur des Aufbaumaterials zumindest innerhalb, bevorzugt jedoch oberhalb, eines vorhandenen Schmelzintervalls liegt.

Bei der Wiederholungs-Abtastung sind die Energieeintragsparameter so bemessen, dass die Temperatur des Aufbaumaterials innerhalb des Auftreffbereichs des Strahlbündels auf dem Aufbaumaterial oberhalb einer Schmelztemperatur des Aufbaumaterials liegt. Falls das Aufbaumaterial anstelle eines exakten Schmelzpunkts ein Schmelzintervall aufweist, dann sollte bei der Wiederholungs-Abtastung die Temperatur des Aufbaumaterials innerhalb des Auftreffbereichs zumindest oberhalb der unteren Grenztemperatur des Schmelzintervalls liegen. Insbesondere können auch bei der Wiederholungs-Abtastung die Energieeintragsparameter so bemessen werden, dass die Temperatur des Aufbaumaterials oberhalb eines vorhandenen Schmelzintervalls liegt.

Eine Schmelztemperatur bzw. ein Schmelzintervall sind in der Regel für ein bestimmtes Aufbaumaterial bekannt. Die Kenntnis der Schmelztemperatur bzw. ein Schmelzintervall des verwendeten Aufbaumaterials sind notwendig, um das Prozessfenster für die additive Herstellung festlegen zu können. Beispielsweise beim selektiven Lasersintern (SLS) wird dieses Prozessfenster auch als Sinterfenster bezeichnet. Das Sinterfenster wird dabei normalerweise definiert als Temperaturbereich zwischen der Onset-Temperatur des Schmelzvorgangs beim Aufheizen (Tmₒₙ) und der Onset-Temperatur des Kristallisationsvorgangs beim Abkühlen (Tcₒₙ). Für eine weitergehende Erläuterung wird hier beispielsweise auf WO 96/06881 A2 oder US 6,136,948 verwiesen. Die Onset-Temperatur des Schmelzvorgangs beim Aufheizen (Tmₒₙ) kann dabei als die Temperatur angesehen werden, bei der Schmelzvorgang einsetzt, während die Onset-Temperatur des Kristallisationsvorgangs beim Abkühlen (Tcₒₙ) als die Temperatur angesehen werden kann, bei der beim Abkühlen eine Kristallisation einsetzt.

Während des Verfestigens des Aufbaumaterials sollte die Temperatur des Aufbaumaterials oberhalb des Prozessfensters bzw. Sinterfensters liegen. Aufgrund der Definition des Sinterfensters ergibt sich damit automatisch, dass die Temperatur des Aufbaumaterials bei einer verfestigenden Bestrahlung oberhalb der Onset-Temperatur des Schmelzvorgangs beim Aufheizen (Tmₒₙ) liegen sollte.

Das Prozess- bzw. Sinterfenster sollte für eine erfolgreiche Herstellung von Objekten mittels eines additiven Herstellverfahrens bekannt sein. Normalerweise wird die entsprechende Information vom Lieferanten eines Aufbaumaterials bereitgestellt. Sollte dies nicht der Fall sein, so kann die Bestimmung des Sinterfensters (Prozessfensters) mittels einer thermischen Analyse, insbesondere mittels dynamischer Differenzkalorimetrie (DDK bzw. DSC) geschehen. Das genaue Vorgehen ist in ISO 11357-1 und ISO 11357-3 beschrieben.

Der Auftreffbereich der Strahlung bzw. des Strahlbündels auf dem Aufbaumaterial kann z.B. als Bereich definiert werden, innerhalb dessen mehr als ein vordefinierter Prozentsatz der maximalen Strahlungsintensität im Strahlbündel auf das Aufbaumaterial auftrifft. Andererseits kann der Auftreffbereich der Strahlung auch als Bereich der Arbeitsebene angesehen werden, innerhalb dessen die auftreffende Strahlungsleistung pro Flächeneinheit zu einer Überschreitung der unteren Grenztemperatur eines vorhandenen Schmelzintervalls des Aufbaumaterials bzw. einer Schmelztemperatur desselben führt. Verschiedene Definitionen sind möglich.

Die Temperatur des Aufbaumaterials innerhalb des Auftreffbereichs des Strahlbündels ist Messungen (z.B. mittels einer IR-Kamera oder eines Pyrometers) zugänglich. Anhand von Vorversuchen mit dem zu verwendenden Aufbaumaterial und/oder der zu verwendenden additiven Herstellvorrichtung kann sichergestellt werden, dass die für die Wiederholungs-Abtastung spezifizierten Energieeintragsparameter dazu führen, dass die Temperatur des Aufbaumaterials innerhalb des Auftreffbereichs des Strahlbündels auf dem Aufbaumaterial oberhalb einer Schmelztemperatur des Aufbaumaterials liegt.

Die Bereitstellung des im zweiten Schritt erzeugten zumindest einen Datenmodells für die Generierung eines Steuerdatensatzes kann z. B. durch ein Integrieren des zumindest einen Datenmodells in einen Steuerdatensatz für die additive Herstellvorrichtung geschehen. Bereitstellen umfasst aber auch ein Weiterleiten des zumindest einen Datenmodells an eine Datenverarbeitungsvorrichtung, welche das zumindest eine Datenmodell in einen Steuerdatensatz integriert, oder ein direktes Weiterleiten an eine additive Herstellvorrichtung. Insbesondere ist es möglich, während eines Herstellvorgangs in der additiven Herstellvorrichtung dieser dynamisch Datenmodelle für noch herzustellende Objekt(abschnitts)querschnitte zur Verfügung zu stellen. Insbesondere müssen erfindungsgemäß erzeugte Datenmodelle nicht einzeln für einen additiven Herstellvorgang bereitgestellt werden. Vielmehr können auch mehrere Datenmodelle zunächst gesammelt und anschließend in ihrer Gesamtheit zur Integration in einen Steuerdatensatz bereitgestellt werden.

Es sei noch bemerkt, dass die für die Generierung eines Steuerdatensatzes bereitgestellten Steuerdaten zum einen aus dem im zweiten Schritt erzeugten zumindest einen Datenmodell selbst bestehen können, zum anderen das zumindest eine Datenmodell aber auch entsprechend etwaigen Formatanforderungen für die Integration in den Steuerdatensatz noch aufbereitet werden kann.

Vorzugsweise wird das Verfahren im Zusammenhang mit der additiven Herstellung von Objekten aus einem kunststoffhaltigen, bevorzugt pulverförmigem, Aufbaumaterial angewandt. Das pulverförmige Aufbaumaterial kann beispielsweise mindestens eines der Polymere, das aus der aus folgenden Polymeren gebildeten Gruppe ausgewählt ist, enthalten: Polyetherimide, Polycarbonate, Polyphenylsulfone, Polyphenyloxide, Polyethersulfone, Acrylnitril-Butadien-Styrol-Copolymerisate, Polyacrylate, Polyester, Polyamide, Polyaryletherketone, Polyether, Polyurethane, Polyimide, Polyamidimide, Polyolefine, Polystyrole, Polyphenylsulfide, Polyvinylidenfluoride, Polyamidelastomere wie Polyetherblockamide sowie Copolymere, welche mindestens zwei verschiedene Monomereinheiten der vorgenannten Polymere enthalten. Geeignete Polyesterpolymere oder Copolymere können aus der aus Polyalkylenterephtholaten (z.B. PET, PBT) und deren Copolymeren bestehenden Gruppe ausgewählt werden. Geeignete Polyolefinpolymere oder Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Das pulverförmige Aufbaumaterial kann zusätzlich oder alternativ mindestens ein Polyblend auf der Basis von mindestens zwei der vorgenannten Polymere und Copolymere enthalten. Dabei können mit dem Kunststoff als Matrix auch noch Zusatzstoffe, z.B. Rieselhilfen, Füllstoffe, Pigmente, etc. vorhanden sein.

Indem erfindungsgemäß im zweiten Schritt der zu verfestigende Bereich in einen ersten und einen zweiten Teilbereich unterteilt wird, kann dem zu verfestigenden Bereich bei der Wiederholungs-Abtastung selektiv zusätzlich Energie zugeführt werden. Indem solch eine Wiederholungs-Abtastung im zweiten Teilbereich spezifiziert wird, kann spezifisch nur jenen Stellen ein Mehr an Energie zugeführt werden, an denen dies aus unterschiedlichsten Gründen für eine hohe Objektqualität notwendig ist. Durch die Wiederholungsabtastung kann eine Nachversinterung (Nachverfestigung) von bereits abgetasteten Stellen stattfinden, indem die Temperatur des Aufbaumaterials oberhalb einer Schmelztemperatur gehalten wird, wodurch eine vollständigere Aufschmelzung des Aufbaumaterials ermöglicht wird. Gleichzeitig wird für eine bessere Anbindung der nachfolgend aufgetragenen Schicht gesorgt, da das neu aufgetragene unverfestigte Pulver auf niedrigviskoses, eventuell zumindest teilweise aufgeschmolzenes, Aufbaumaterial auftrifft.

Da erfindungsgemäß die Wiederholungs-Abtastung nur in einem Teil des zu verfestigenden Bereichs spezifiziert wird, wird bei der Herstellung des Objekts Zeit eingespart. Insbesondere wenn der erste Teilbereich jene Stellen des zu verfestigenden Bereichs umfasst, an denen die Verfestigungs-Abtastung für eine akzeptable Objektqualität ausreichend ist, kann ein übergroßer Energieeintrag an diesen Stellen des ersten Teilbereichs vermieden werden. Hier ist zu berücksichtigen, dass bei kunststoffhaltigem Aufbaumaterial darauf geachtet werden muss, dass durch einen Energieeintrag nicht eine Zersetzung des Aufbaumaterials stattfindet.

Bevorzugt wird im zweiten Schritt ein Datenmodell für alle Schichten erzeugt, die dem Objektabschnitt entsprechende zu verfestigende Bereiche enthalten.

Bevorzugt ist in dem Steuerdatensatz für mindestens eine Aufbaumaterialschicht eine vom Aufbaumaterial abhängige, bevorzugt einstellbare, Wartezeit spezifiziert, die nach der Abtastung aller in dem zugehörigen Datenmodell spezifizierten Stellen in dem zu verfestigenden Bereich (51) abgewartet wird, bevor die Materialauftragseinrichtung zum Auftrag einer weiteren Aufbaumaterialschicht angesteuert wird.

**In** jeder additiven Herstellvorrichtung vergeht eine gewisse systembedingte Zeit zwischen der Abtastung der letzten zu verfestigenden Stelle einer Aufbaumaterialschicht und dem Auftrag einer neuen Aufbaumaterialschicht. Dies ist der Geschwindigkeit der Datenverarbeitung in der additiven Herstellvorrichtung oder einer damit verbundenen Datenprozessorvorrichtung bzw. der Reaktionszeit der Mechanik in der Schichtauftragsvorrichtung geschuldet. Die angegebene Wartezeit ist im Vergleich dazu eine Zeit, die zusätzlich vor dem Auftrag einer neuen Aufbaumaterialschicht abgewartet wird, um eine vorhandene Temperiereinrichtung (z.B. eine zur Vorheizung des Pulver sowieso vorhandene Flächenheizung) auf Stellen der Aufbaumaterialschicht einwirken zu lassen, an denen bereits eine Verfestigungs-Abtastung durchgeführt wurde. Natürlich kann man erfindungsgemäß auch anstelle oder zusätzlich zur Einführung einer expliziten zusätzlichen Wartezeit die systembedingte Zeit entsprechend ausdehnen, z.B. indem eine Geschwindigkeit der Datenverarbeitung verlangsamt wird und/oder eine Bewegungsgeschwindigkeit der Schichtauftragsvorrichtung verlangsamt wird. Bevorzugt ist die Wartezeit einstellbar (also veränderbar), um auf diese Weise die Wartezeit an unterschiedliche Aufbaumaterialien anpassen zu können. Die Wartezeit ist beispielhaft größer oder gleich 7 Sekunden und/oder kleiner oder gleich 30 Sekunden.

Während der Wartezeit kann eine Nachversinterung (Nachverfestigung) von bereits abgetasteten Stellen stattfinden, indem die Strahlung der Temperiereinrichtung die Temperatur des Aufbaumaterials oberhalb einer Schmelztemperatur hält, wodurch eine vollständigere Aufschmelzung des Aufbaumaterials ermöglicht wird. Bei der erffindungsgemäßen Wiederholungs-Abtastung kann eine Nachverfestigung nur an einigen Stellen des zu verfestigenden Bereichs durchgeführt werden. Damit kann im Vergleich zu einer Nachverfestigung alleine mittels einer flächenhaften Temperiereinrichtung spezifischer nachverfestigt werden. Insbesondere kann eine Nachverfestigung mittels der Wiederholungs-Abtastung unterstützend zu einer Nachverfestigung mittels einer Temperiereinrichtung stattfinden, wodurch eine zu starke Aufheizung von Stellen durch eine global auf die Aufbaumaterialschicht einwirkende Temperiereinrichtung vermieden wird.

Weiter bevorzugt erfolgt im zweiten Schritt die Unterteilung in einen ersten Teilbereich und einen zweiten Teilbereich so, dass der zweite Teilbereich all jene zu verfestigenden Stellen enthält, an denen eine Zeitdifferenz zwischen dem Zeitpunkt der Verfestigungs-Abtastung der jeweiligen Stelle und dem Ende der Wartezeit eine Minimalzeit unterschreitet.

Bei dem soeben beschriebenen Vorgehen macht man sich zunutze, dass die Temperiereinrichtung während des Ablaufs der Verfestigungs-Abtastung bereits auf abgetastete Stellen einwirken kann. Damit kann die Wartezeit, während der die Temperiereinrichtung auf das Aufbaumaterial einwirkt, verringert werden, da letztere lediglich eine Minimalzeit einwirken muss, die geringer ist als eine Standard-Wartezeit ohne Anwendung der Wiederholungs-Abtastung. Als Folge kann der Herstellvorgang eines Objekts schneller vonstattengehen, da nicht vor dem Auftrag einer neuen Aufbaumaterialschicht die standardmäßig vorgegebene Wartezeit abgewartet werden muss.

Bevorzugt erfolgt im zweiten Schritt die Unterteilung des zu verfestigenden Bereichs in einen ersten Teilbereich und einen zweiten Teilbereich dergestalt, dass bei der Verfestigungs-Abtastung Stellen in dem zweiten Teilbereich zeitlich nach Stellen in dem ersten Teilbereich abgetastet werden.

Bei dem soeben beschriebenen Vorgehen werden gezielt jene Stellen einer Wiederholungs-Abtastung unterzogen, die bei der (sequentiellen) Verfestigungs-Abtastung zuletzt abgetastet wurden. Bevorzugt trifft dies auf mindestens 80% der Stellen im zweiten Teilbereich zu, noch weiter bevorzugt auf alle Stellen im zweiten Teilbereich. Damit wird bei der Wiederholungs-Abtastung gezielt auf jene Stellen eingewirkt, an denen die Einwirkzeit der Temperiereinrichtung auf das Aufbaumaterial kürzer ist als an den anderen Stellen (nämlich jenen im ersten Teilbereich). Dadurch kann die Wartezeit nach der Verfestigungs-Abtastung aller Stellen des zu verfestigenden Bereichs gering gehalten werden.

Bevorzugt sind die Energieeintragsparameter bei der Wiederholungs-Abtastung so bemessen, dass der Energieeintrag pro Flächeneinheit mehr als 25%, bevorzugter mehr als 30%, noch bevorzugter mehr als 40% und/oder weniger als 60%, bevorzugter weniger als 55%, noch bevorzugter weniger als 50% des Energieeintrags pro Flächeneinheit bei der Verfestigungs-Abtastung beträgt.

Es hat sich herausgestellt, dass die genannten Prozentwerte für die meisten Aufbaumaterialien ausreichend sind, um die Temperatur im Auftreffbereich des Strahlbündels oberhalb einer Schmelztemperatur des Aufbaumaterials zu halten.

Bevorzugt ist für die Wiederholungs-Abtastung eine höhere Abtastgeschwindigkeit bei der Bewegung des zumindest einen Strahlbündels über das Aufbaumaterial spezifiziert als bei der Verfestigungs-Abtastung.

Bei dieser Vorgehensvariante kann bei der Wiederholungs-Abtastung ein im Vergleich zur Verfestigungs-Abtastung niedrigerer Energieeintrag dadurch eingestellt werden, dass die Abtastgeschwindigkeit höher ist. Dies hat auch noch den Vorteil, dass die Wiederholungs-Abtastung schneller durchgeführt werden kann, wodurch die Herstellungszeit der Objekte verringert wird.

Bevorzugt wird im zweiten Schritt in mindestens einem Datenmodell der erste Teilbereich so gewählt wird, dass er auf einer Kontur eines Objektquerschnitts liegt.

Durch dieses Vorgehen ist es möglich, gerade im Objektinneren, durch die Wiederholungs-Abtastung für eine möglichst vollständige Aufschmelzung des Aufbaumaterials zu sorgen, aus der gute mechanische Parameter resultieren, ohne dass es durch die Wiederholungs-Abtastung zu einem vermehrten Anhaften von nicht zu verfestigendem Aufbaumaterial am Objekt kommt, wie es an der Kontur eines Objektquerschnitts der Fall sein kann.

Bevorzugt wird im zweiten Schritt (S2) der zweite Teilbereich (51b) so festgelegt, dass er innerhalb eines vorgegebenen ausgezeichneten Abschnitts eines Objekts liegt, für den ein Mindestwert für einen mechanischen Parameter, insbesondere eine Bruchdehnung und/oder eine Dichte und/oder eine Zugfestigkeit und/oder einen Elastizitätsmodul, vorgegeben sind.

Durch das Vorgehen kann für eine möglichst vollständige Auschmelzung des Aufbaumaterials gerade an jenen Orten gesorgt werden, an denen erhöhte Anforderungen an die mechanischen Eigenschaften in Gestalt von Mindestvorgaben für mechanische Parameter vorliegen.

Bei einem erfindungsgemäßen additiven Herstellverfahren zur Herstellung einer Anzahl von dreidimensionalen Objekten, wobei die Objekte hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, wird der Ablauf des additiven Herstellverfahrens durch einen Steuerdatensatz gesteuert wird, in den die nach einem erfindungsgemäßen Verfahren bereitgestellten Steuerdaten integriert wurden.

Wenn erfindungsgemäß bereitgestellte Steuerdaten in einem Steuerdatensatz verwendet werden, der für die Steuerung eines additiven Herstellverfahrens generiert wurde, insbesondere die Steuerung eines schichtweisen additiven Herstellverfahrens, wie beispielsweise eines schichtweisen Pulverschmelz- oder Sinterverfahrens, können die Herstellgeschwindigkeit und/oder die mechanischen Eigenschaften des Objekts verbessert werden.

Eine erfindungsgemäße Vorrichtung zur Bereitstellung von Steuerdaten für eine additive Herstellvorrichtung zur Herstellung einer Anzahl von dreidimensionalen Objekten, wobei die Objekte mittels der additiven Herstellvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, weist auf:
eine Datenzugriffseinheit, die ausgelegt ist zum Zugriff auf computerbasierte Modelldaten einer Anzahl von Abschnitten der Anzahl von herzustellenden Objekten,
eine Datenmodell-Generierungseinheit, die ausgelegt ist,
   eine Anzahl von Datenmodellen zu generieren, in denen jeweils für eine Aufbaumaterialschicht ein während der Herstellung der Anzahl von Abschnitten zu verfestigender Bereich der jeweiligen Aufbaumaterialschicht spezifiziert ist,
wobei der zu verfestigende Bereich in einen ersten Teilbereich und einen zweiten Teilbereich unterteilt ist,
wobei in einem Datenmodell jeweils eine das Aufbaumaterial verfestigende Verfestigungs-Abtastung der Stellen in dem zu verfestigenden Bereich mittels der Energieeintragseinrichtung spezifiziert ist und an den Stellen des zweiten Teilbereichs, nicht aber an den Stellen des ersten Teilbereichs, eine Wiederholungs-Abtastung mit zumindest einem Strahlbündel spezifiziert ist, wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, bevorzugt innerhalb des Schmelzintervalls des Aufbaumaterials oder darüber liegt, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt, und
eine Steuerdaten--Bereitstellungseinheit, die ausgelegt ist, von der Datenmodell-Generierungseinheit generierte Datenmodelle als Steuerdaten für die Integration in einen Steuerdatensatz der additiven Herstellvorrichtung bereit zu stellen.

Die Bereitstellung des im zweiten Schritt erzeugten Datenmodells für die Generierung eines Steuerdatensatzes kann durch die Steuerdaten-Bereitstellungseinheit selbst geschehen, indem diese das erzeugte Datenmodell in einen Steuerdatensatz für die additive Herstellvorrichtung integriert. Ein Bereitstellen umfasst hier auch ein Weiterleiten des Datenmodells an eine Datenverarbeitungsvorrichtung, welche das Datenmodell in einen Steuerdatensatz integriert, oder ein direktes Weiterleiten an eine additive Herstellvorrichtung. Insbesondere ist es möglich, während eines Herstellvorgangs in der additiven Herstellvorrichtung dieser dynamisch Datenmodelle für noch herzustellende Objektquerschnitte zur Verfügung zu stellen. Insbesondere müssen im zweiten Schritt erzeugte Datenmodelle nicht einzeln für einen additiven Herstellvorgang bereitgestellt werden. Vielmehr können auch mehrere erzeugte Datenmodelle zunächst gesammelt und anschließend in ihrer Gesamtheit zur Integration in einen Steuerdatensatz bereitgestellt werden.

Eine erfindungsgemäße Vorrichtung zur computergestützten Ansteuerung einer Energieeintragseinrichtung einer additiven Herstellvorrichtung zur Herstellung einer Anzahl von dreidimensionalen Objekten mittels derselben,
wobei die Objekte mittels der additiven Herstellvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, ist so ausgelegt, dass
für eine Anzahl von Aufbaumaterialschichten jeweils ein während der Herstellung einer Anzahl von Abschnitten der Anzahl von Objekten zu verfestigender Bereich der Aufbaumaterialschicht spezifiziert ist,
wobei der zu verfestigende Bereich in einen ersten Teilbereich und einen zweiten Teilbereich unterteilt ist,
wobei jeweils eine das Aufbaumaterial verfestigende Verfestigungs-Abtastung der Stellen in dem zu verfestigenden Bereich mittels der Energieeintragseinrichtung spezifiziert ist und an den Stellen des zweiten Teilbereichs, nicht aber an den Stellen des ersten Teilbereichs, eine Wiederholungs-Abtastung mit zumindest einem Strahlbündel spezifiziert ist,
wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, bevorzugt innerhalb des Schmelzintervalls des Aufbaumaterials liegt, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt.

Die Vorrichtung zur computergestützten Ansteuerung einer Energieeintragseinrichtung kann alleine mittels Software-Komponenten, mittels einer Mischung aus Hardware- und Softwarekomponenten oder sogar alleine mittels Hardwarekomponenten realisiert werden. Eine alleine mittels Softwarekomponenten realisierte Vorrichtung kann zur Herstellung eines dreidimensionalen Objekts insbesondere mit einer Steuereinrichtung in einer additiven Herstellvorrichtung interagieren oder in solch eine Steuereinrichtung integriert sein. Mittels der Vorrichtung zur computergestützten Ansteuerung einer Energieeintragseinrichtung kann die Bauteilhomogenität von durch ein additives Herstellverfahren hergestellten Objekten verbessert werden. Insbesondere kann die Vorrichtung eine Herstellung von Objekten durch ein additives Herstellverfahren unter Zugrundelegung eines Steuerdatensatzes implementieren, der mittels eines erfindungsgemäßen Verfahrens zur Bereitstellung von Steuerdaten generiert wurde.

Eine erfindungsgemäße additive Herstellvorrichtung zur Herstellung einer Anzahl von dreidimensionalen Objekten, wobei in der additiven Herstellvorrichtung die Objekte hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, weist auf:
eine Materialauftragseinrichtung, die geeignet ist, eine Schicht eines Aufbaumaterials auf eine bereits vorhandene, bevorzugt bereits selektiv verfestigte, Aufbaumaterialschicht aufzubringen, und
eine Energieeintragseinrichtung, die geeignet ist, die dem Querschnitt des Objekts in einer Schicht zugeordneten Stellen mit mindestens einem Strahlbündel abzutasten,
wobei die additive Herstellvorrichtung eine erfindungsgemäße Vorrichtung zur computergestützten Ansteuerung einer Energieeintragseinrichtung einer additiven Herstellvorrichtung zur Herstellung einer Anzahl von dreidimensionalen Objekten mittels derselben aufweist und/oder mit einer erfindungsgemäßen Vorrichtung zur computergestützten Ansteuerung einer Energieeintragseinrichtung einer additiven Herstellvorrichtung zur Herstellung einer Anzahl von dreidimensionalen Objekten mittels derselben signaltechnisch verbunden ist.

Eine Energieeintragseinrichtung kann hierbei eine Anzahl von Strahlungsquellen zur Erzeugung von Strahlung, z.B. elektromagnetischer Strahlung oder Teilchenstrahlung, sowie eine damit verbundene Anzahl von Strahlablenk- oder -umlenkeinrichtungen zum Richten der Strahlung auf das Aufbaumaterial umfassen. Insbesondere trifft bevorzugt in einem Strahlungseinwirkbereich Strahlung genau einer Strahlablenkeinrichtung auf das Aufbaumaterial. Bei den Strahlungsquellen kann es sich beispielsweise um einen oder mehrere Gas- oder Festkörperlaser oder jede andere Art von Lasern wie z.B. Laserdioden, insbesondere VCSELn (Vertical Cavity Surface Emitting Laser) oder VECSELn (Vertical External Cavity Surface Emitting Laser) oder eine Zeile dieser Laser handeln.

Insbesondere kann bei Erzeugung der Steuerdaten in der additiven Herstellvorrichtung diese während eines Herstellvorgangs mittels der Datenmodell-Erzeugungseinheit dynamisch Datenmodelle für noch herzustellende Objekt(teil)querschnitte erzeugen.

Bevorzugt weist die erfindungsgemäße additive Herstellvorrichtung weiterhin eine Temperiervorrichtung auf, die ausgelegt ist, bereits mit einem Strahlbündel abgetastetes Aufbaumaterial auf einer Temperatur zu halten, die oberhalb einer Schmelztemperatur des Aufbaumaterials, bevorzugt innerhalb des Schmelzintervalls des Aufbaumaterials oder darüber.

Eine Temperiereinrichtung ist eine Bestrahlungsvorrichtung, die elektromagnetische Strahlung in eine Aufbaumaterialschicht eintragen kann, um dieser unabhängig von einer vorhandenen Energieeintragseinrichtung Energie zuzuführen. Bevorzugt wirkt dabei die Strahlung der Temperiereinrichtung über einen größeren Zeitraum auf das Aufbaumaterial ein, mit anderen Worten die Temperiereinrichtung wird nicht für die Dauer der Verfestigungs-Abtastung abgeschaltet. Wie bereits weiter oben teilweise erwähnt, kann mittels der Temperiereinrichtung eine Nachverfestigung bereits bei der Verfestigungs-Abtastung abgetasteter Stellen bewirkt werden. Während solch eine Nachverfestigung auch beim eingangs genannten Stand der Technik angewendet wird, nachdem mit einem Laserstrahl zunächst lediglich das Absorptionsverhalten verändert wurde, haben die Erfinder festgestellt, dass sich das Einfügen einer Wartezeit überraschenderweise auch in solchen Fällen positiv auf die Objekteigenschaften auswirkt, in denen bei der Abtastung mit einem Strahlbündel das Aufbaumaterial bereits verfestigt wurde, insbesondere bereits vollständig aufgeschmolzen wurde. Die Erfinder erklären sich dies so, dass durch die Wirkung der Strahlung der Tempe-riereinrichtung auf das Aufbaumaterial einer zu starken Abkühlung der belichteten Bereiche vor dem Auftragen der nächsten Aufbaumaterialschicht entgegen gewirkt wird. Insbesondere bewirkt die Strahlung der Temperiereinrichtung, dass beim Auftrag einer neuen Schicht mit noch kühlem Aufbaumaterial letzteres in Kontakt mit einer niedrigviskosen, heißen Schmelze der bereits vorhandenen Schicht gelangt, was zu einer besseren Durchdringung von kühlem und heißem Material führt. Insbesondere kann infolge der Verwendung einer Temperiereinrichtung die bei der Verfestigungs-Abtastung eingetragene Energie verringert werden, wodurch Überhitzungen, insbesondere eine Schädigung des Aufbaumaterials infolge eines zu hohen Wärmeeintrags, vermieden werden.

Weiter bevorzugt ist bei der erfindungsgemäßen additiven Herstellvorrichtung die Temperiervorrichtung eine Strahlungsheizung, die bevorzugt ausgelegt ist zum flächigen Eintragen von Strahlungsenergie in das Aufbaumaterial in einer Arbeitsebene der additiven Herstellvorrichtung, in der das Aufbaumaterial mit dem mindestens einen Strahlbündel abgetastet wird.

Eine Strahlungsheizung ist hierbei insbesondere eine Bestrahlungsvorrichtung, die elektromagnetische Strahlung, insbesondere Infrarotstrahlung, flächig in eine Aufbaumaterialschicht eintragen kann. Flächig bedeutet hier, dass der Strahlungsauftreffbereich auf dem Aufbaumaterial jeweils einen Mindestdurchmesser von 1000 µm in zwei aufeinander senkrecht stehenden Richtungen parallel zur Aufbaumaterialschicht bzw. Arbeitsebene aufweist. Bevorzugt ist die Strahlungsheizung in der Lage mindestens 10% des Baufeldes, bevorzugt mindestens 20% des Baufeldes, weiter bevorzugt mindestens 50% des Baufeldes, zeitgleich zu bestrahlen. Durch den flächigen Energieeintrag ist es insbesondere auch möglich, die Strahlungsheizung stationär einen bestimmten Bereich des Baufeldes bestrahlen zu lassen, wodurch die Ansteuerung der Temperiereinrichtung sehr einfach ist. Insbesondere kann auch eine zur Vorheizung des Aufbaumaterials auf eine Prozesstemperatur innerhalb eines Prozess- oder Sinterfensters dienende Strahlungsheizung zusätzlich als Temperiereinrichtung verwendet werden.

Ein erfindungsgemäßes Computerprogramm, weist Programmcodemittel auf, um alle Schritte eines erfindungsgemäßen computergestützten Verfahrens zur Bereitstellung von Steuerdaten für eine additive Herstellvorrichtung zur Herstellung einer Anzahl von dreidimensionalen Objekten Verfahrens oder eines erfindungsgemäßen additiven Herstellverfahrens auszuführen, wenn das Computerprogramm mittels eines Datenprozessors, insbesondere eines mit einer additiven Herstellvorrichtung zusammenwirkenden Datenprozessors, ausgeführt wird.

"Zusammenwirken" heißt hierbei, dass der Datenprozessor entweder in die additive Herstellvorrichtung integriert ist oder mit ihr Daten austauschen kann. Die Implementierung des erfindungsgemäßen Verfahrens zur Bereitstellung von Steuerdaten sowie die Implementierung der zugehörigen Vorrichtung mittels Software ermöglicht eine einfache Installierbarkeit auf verschiedenen EDV-Systemen an verschiedenen Orten (beispielsweise beim Ersteller des Designs des Objekts oder aber beim Betreiber der additiven Herstellvorrichtung).

Weitere Merkmale und Zweckmäßigkeiten der Erfindung ergeben sich aus der Beschreibung von Ausführungsbeispielen anhand der beigefügten Zeichnungen.
- Fig. 1: zeigt eine schematische, teilweise im Schnitt dargestellte Ansicht einer beispielhaften Vorrichtung zum additiven Herstellen eines dreidimensionalen Objekts gemäß einer Ausführungsform der Erfindung,
- Fig. 2: zeigt schematisch eine Draufsicht auf einen Querschnitt eines Objekts während seiner Herstellung zur Veranschaulichung der unterschiedlichen Bereiche eines Objektquerschnitts im Rahmen eines ersten Ausführungsbeispiels der Erfindung,
- Fig. 3: zeigt schematisch die zeitliche Reihenfolge der Abtastung der einzelnen Stellen für den Objektquerschnitt von Fig. 2,
- Fig. 4: veranschaulicht die Aufteilung des zu verfestigenden Bereichs in einen ersten Teilbereich und einen zweiten Teilbereich für den in Fig. 2 und 3 gezeigten Objektquerschnitt,
- Fig. 5: zeigt schematisch eine Draufsicht auf einen Querschnitt eines Objekts zur Veranschaulichung des Vorgehens bei einem zweiten Ausführungsbeispiel,
- Fig. 6: veranschaulichen ein mögliches Vorgehen gemäß einem dritten Ausführungsbeispiel,
- Fig. 7: veranschaulicht den Ablauf eines Ausführungsbeispiels eines erfindungsgemäßen Verfahrens zur Bereitstellung von Steuerdaten und
- Fig. 8: zeigt den schematischen Aufbau eines Ausführungsbeispiels einer erfindungsgemäßen Vorrichtung zur Bereitstellung von Steuerdaten.

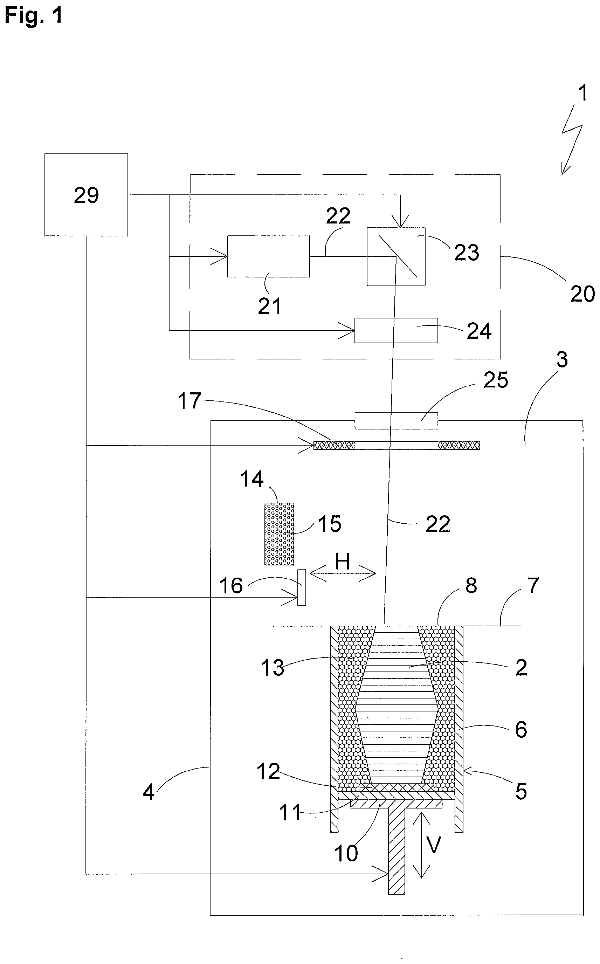

Für eine Beschreibung der Erfindung soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 als Materialauftragsvorrichtung zum Aufbringen des Aufbaumaterials 15 innerhalb des Baufelds 8. Optional kann in der Prozesskammer 3 eine Heizvorrichtung, z.B. eine Strahlungsheizung 17, angeordnet sein, die zum Beheizen des aufgebrachten Aufbaumaterials dient. Als Strahlungsheizung 17 kann beispielsweise ein Infrarotstrahler vorgesehen sein.

Die beispielhafte additive Herstellvorrichtung 1 enthält ferner eine Energieeintragseinrichtung 20 mit einem Laser 21, der einen Laserstrahl 22 erzeugt, welcher über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Energieeintragseinrichtung als der gezeigten. Um kenntlich zu machen, dass die Gestalt des Strahlungsauftreffbereichs auf dem Aufbaumaterial nicht notwendigerweise annähernd punktförmig, sondern auch flächig sein kann, wird in dieser Anmeldung auch oftmals der Begriff "Strahlbündel" synonym zu "Strahl" verwendet.

Die Lasersintervorrichtung 1 enthält weiterhin eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der additiven Herstellvorrichtung angebracht sein. Die Steuereinrichtung kann eine CPU enthalten, deren Betrieb durch ein Computerprogramm (Software) gesteuert wird. Das Computerprogramm kann getrennt von der additiven Herstellvorrichtung in einer Speichervorrichtung gespeichert sein, von wo aus es (z.B. über ein Netzwerk) in die additive Herstellvorrichtung, insbesondere in die Steuereinrichtung, geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

In der soeben beispielhaft beschriebenen additiven Herstellvorrichtung geht ein Herstellvorgang so vonstatten, dass die Steuereinheit 29 einen Steuerdatensatz abarbeitet.

Durch den Steuerdatensatz wird einer Energieeintragseinrichtung, im Falle der obigen Lasersinter- oder Laserschmelzvorrichtung speziell der Umlenkvorrichtung 23, für jeden Zeitpunkt während des Verfestigungsvorgangs vorgegeben, auf welche Stelle der Arbeitsebene 7 Strahlung zu richten ist.

Insbesondere bei dem weiter unten beschriebenen ersten Ausführungsbeispiel der Erfindung läuft dabei der Herstellvorgang so ab, dass eine in der additiven Herstellvorrichtung vorhandene Strahlungsheizung 17 als Temperiereinrichtung verwendet wird. Im Detail wird dabei nach dem Richten der Laserstrahlung auf alle zu verfestigenden Stellen einer Aufbaumaterialschicht eine Wartezeit spezifiziert, innerhalb derer die Aufbaumaterialschicht der von der Strahlungsheizung 17 emittierten Strahlung ausgesetzt ist. Durch die Einwirkung der von der als Temperiereinrichtung wirkenden Strahlungsheizung 17 emittierten Strahlung verbessern sich die mechanischen Eigenschaften der hergestellten Objekte. Die spezifizierte Wartezeit, die auch als Nachsinterzeit bezeichnet wird, ist vom Aufbaumaterial und vom Aufbau der verwendeten additiven Herstellvorrichtung abhängig und liegt beispielsweise in einem Bereich zwischen 5 und 30 Sekunden.

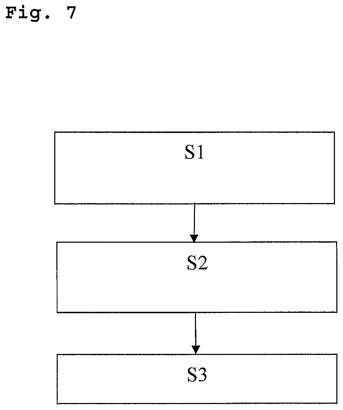

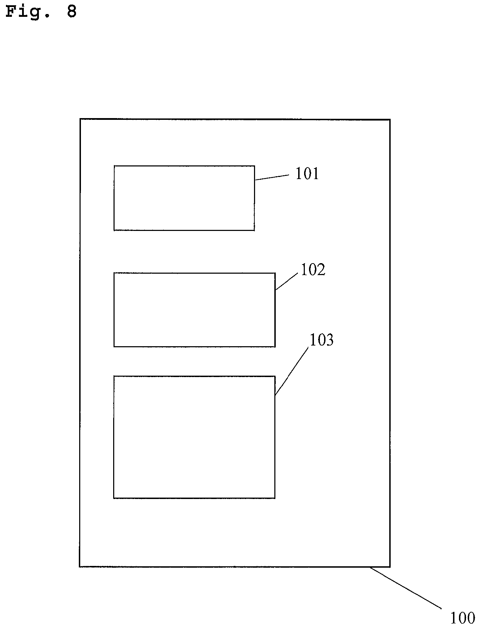

Wie in Fig. 8 gezeigt, enthält eine Vorrichtung 100 zur Bereitstellung von Steuerdaten für eine additive Herstellvorrichtung eine Datenzugriffseinheit 101, eine Datenmodell-Generierungseinheit 102 und eine Datenmodell-Bereitstellungseinheit 103. Die Funktionsweise der Vorrichtung 100 zur Bereitstellung von Steuerdaten wird unter Bezugnahme auf Fig. 7 beispielhaft beschrieben.

In der in Fig. 8 gezeigten Vorrichtung 100 zur Bereitstellung von Steuerdaten für eine additive Herstellvorrichtung greift zunächst die Datenzugriffseinheit 101 auf eine Anzahl, also einen oder mehrere, von Schichtdatensätzen zu, von denen jeder ein Datenmodell eines während der Herstellung selektiv zu verfestigenden Bereichs einer Aufbaumaterialschicht, bevorzugt des gesamten zu verfestigenden Bereichs einer Aufbaumaterialschicht, aufweist, der einem Querschnitt eines Objektabschnitts entspricht. In dem in Fig. 7 gezeigten Verfahrensablauf ist dies der erste Schritt S1.

In dem in Fig. 7 gezeigten zweiten Schritt S2 spezifiziert nun die Datenmodell-Generierungseinheit 102 in einem Datenmodell eines selektiv zu verfestigenden Bereichs einer Aufbaumaterialschicht Stellen, auf die der Laserstrahl gerichtet werden soll, und Strahlungsparameter für den Laserstrahl während des Richtens des Laserstrahls auf die einzelnen Stellen. Weiterhin wird auch eine zeitliche Reihenfolge der Verfestigung von Stellen der Aufbaumaterialschicht spezifiziert. Beispielsweise wird eine Bewegung des einen oder der mehreren Strahlbündel, die in der additiven Herstellvorrichtung verwendet werden, entlang von Scanlinien über das Aufbaumaterial festgelegt.

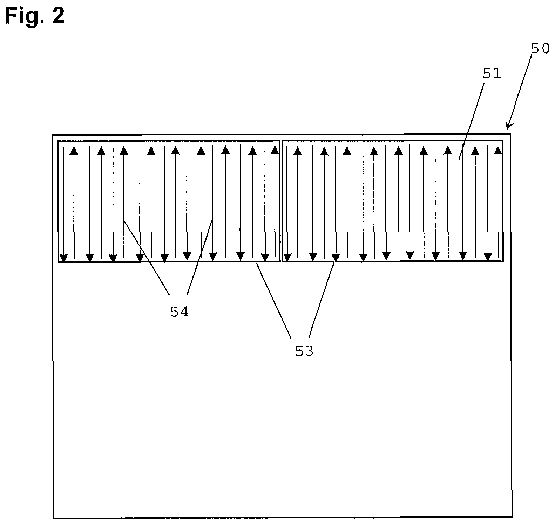

Die Figuren 2 bis 4 zeigen ein erstes Ausführungsbeispiel für das detaillierte Vorgehen im zweiten Schritt. Fig. 2 zeigt Abtastbereiche 53 eines Objektquerschnitts 50, die im Beispiel streifenförmig, d.h. rechteckig, sind und durch Bewegen eines Strahlbündels Scanlinie für Scanlinie abgetastet werden. In Fig. 2 wird dabei der zu verfestigende Bereich 51, der mit dem Objektquerschnitt 50 identisch ist, so mit Energiestrahlung abgetastet, dass bereichsweise, also Abtastbereich 53 für Abtastbereich 53 das Material verfestigt wird. Aus Gründen der besseren Darstellbarkeit sind in Fig. 2 nicht alle Abtastbereiche 53, sondern lediglich zwei, gezeigt. Die Bewegung des Strahlbündels innerhalb der Abtastbereiche 53 entlang von zueinander parallelen Scanlinien bzw. Hatchlinien bzw. Verfestigungsbahnen 54 wird üblicherweise als "Hatchen" (deutsch: schraffieren) bezeichnet. Die Pfeile in Fig. 2 sollen die Bewegungsrichtung des Strahlbündels über die Aufbaumaterialschicht veranschaulichen. Man erkennt, dass in Fig. 2 zwei benachbarte Hatchlinien bzw. Verfestigungsbahnen 54 stets in entgegengesetzter Richtung durchlaufen werden. Solch ein Vorgehen birgt Geschwindigkeitsvorteile, da der Weg des Strahlbündels ohne Energieeintrag in das Aufbaumaterial (an den Umkehrpunkten der Bewegungsrichtung) dadurch kurz sein kann. Alternativ ist es aber auch möglich, dass alle Hatchlinien in der gleichen Richtung durchlaufen werden.

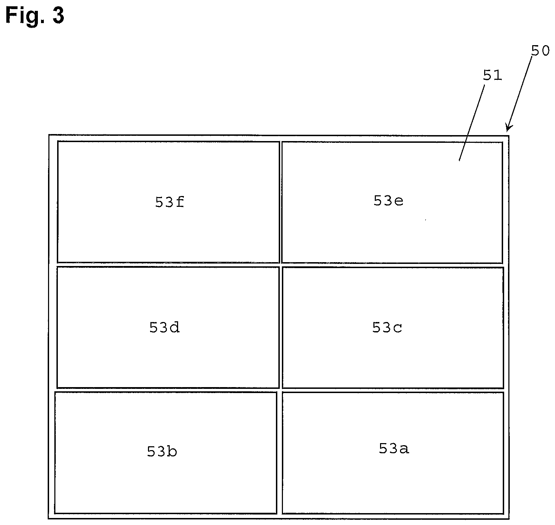

Fig. 3 zeigt alle bei der Verfestigung des Bereichs 51 zu verfestigenden Abtastbereiche 53a bis 53f. Die an die Bezugszeichen angefügten Buchstaben a bis f sollen dabei die zeitliche Reihenfolge veranschaulichen, in der die Abtastbereiche 53a bis 53f nacheinander mit einem Strahlbündel abgetastet werden. In Fig. 3 wird also der Abtastbereich 53a rechts unten als erstes verfestigt und der Abtastbereich 53f links oben als letztes verfestigt.

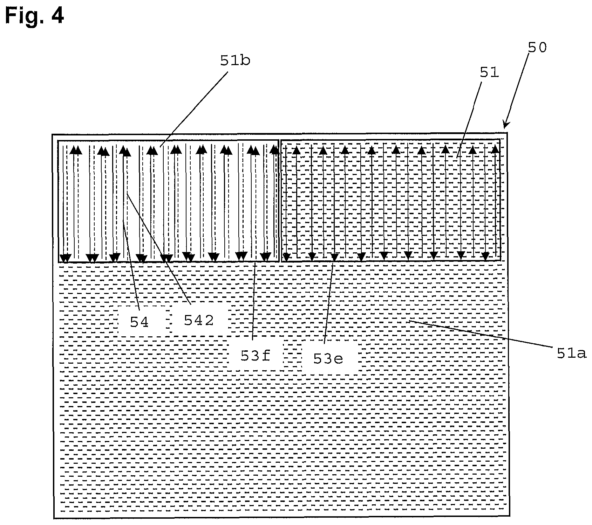

Wie in Fig. 4 gezeigt, führt die Datenmodell-Generierungseinheit 102 eine Aufteilung des zu verfestigenden Teilbereichs 51 in einen ersten Teilbereich 51a und einen zweiten Teilbereich 51b durch, die sich dadurch voneinander unterscheiden, dass es für die beiden Teilbereiche eine unterschiedliche Spezifikation für die Abtastung mit Energiestrahlung gibt. In Fig. 4 wird die Unterscheidung zwischen den beiden Teilbereichen dadurch kenntlich gemacht, dass der Teilbereich 51a im Gegensatz zum Teilbereich 51b mit einer horizontalen gestrichelten Schraffur versehen ist. Man erkennt, dass der Teilbereich 51b aus dem Abtastbereich 53f besteht und der Teilbereich 51a aus den Abtastbereichen 53a bis 53e besteht.

Im Gegensatz zum ersten Teilbereich 51a findet im zweiten Teilbereich 51b eine wiederholte Abtastung des Aufbaumaterials mit Energiestrahlung statt. In diesem Ausführungsbeispiel ist diesbezüglich spezifiziert, dass im gesamten Teilbereich 51b ein Strahlbündel wiederholt entlang von Hatchlinien über das Aufbaumaterial bewegt wird. In Fig. 4 sind dies mit dem Bezugszeichen 542 versehene gestrichelte Hatchlinien. Zur Veranschaulichung des unterschiedlichen Vorgehens in den Teilbereichen 51a und 51b ist in Fig. 4 auch noch der Abtastbereich 53e gezeigt, in welchem keine Hatchlinien 542 vorhanden sind. Es sei hier nochmals betont, dass die wiederholte Abtastung im zweiten Teilbereich 51b erfindungsgemäß immer vor dem Auftragen der nächsten Aufbaumaterialschicht durchgeführt wird.

Infolge der wiederholten Abtastung des Aufbaumaterials im zweiten Teilbereich 51b, welcher so gewählt wurde, dass es sich um jenen Abschnitt des zu verfestigenden Bereichs 51 handelt, der bei der Verfestigungs-Abtastung zuletzt abgetastet wurde, ist es zum Einen möglich, im zweiten Teilbereich 51b die Objektqualität zu verbessern. In diesem Bereich kann die Strahlung der Temperiereinrichtung nicht so lange auf das Aufbaumaterial einwirken wie im Teilbereich 51a, wenn man berücksichtigt, dass die Strahlung der Temperiereinrichtung nicht nur während der spezifizierten Wartezeit, sondern auch bereits während der Verfestigungs-Abtastung auf das Aufbaumaterial einwirkt. Durch die Wiederholungs-Abtastung kann dabei gezielt in diesem Bereich zusätzlich Energie in das Aufbaumaterial eingetragen werden. Zum Anderen kann bei dem Vorgehen gemäß dem ersten Ausführungsbeispiel die Wartezeit kürzer, insbesondere kürzer als eine minimal notwendige Wartezeit (Minimalwartezeit bzw. Minimalzeit), gewählt werden, da im zuletzt abgetasteten zweiten Teilbereich 51b zusätzlich zur Strahlung der Temperiereinrichtung die Strahlung bei der wiederholten Abtastung auf das Aufbaumaterial einwirkt. Dadurch wird die für einen Herstellvorgang insgesamt benötigte Zeitdauer geringer.

Für die bei der Wiederholungs-Abtastung im Teilbereich 51b einzutragende Energie pro Flächeneinheit wird bevorzugt ein geringerer Wert spezifiziert als für die bei der verfestigenden Abtastung in den Teilbereichen 51a und 51b eingetragenen Energie pro Flächeneinheit. Dies kann beispielsweise durch eine geringeren spezifizierten Wert für die Strahlungsleistung pro Flächeneinheit im Auftreffbereich des bei der Wiederholungs-Abtastung verwendeten Strahlbündels und/oder eine höhere Verfahrgeschwindigkeit des Strahlbündels über das Aufbaumaterial und/oder eine veränderte räumliche Verteilung der Strahlungsleistung pro Flächeneinheit innerhalb des Auftreffbereichs des Strahlbündels bewerkstelligt werden.

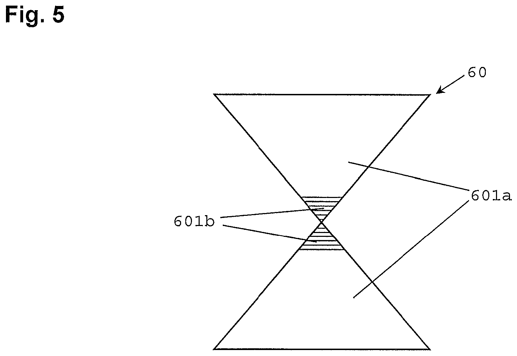

Bei dem in Fig. 5 veranschaulichten zweiten Ausführungsbeispiel wird die Aufteilung des zu verfestigenden Bereichs in einen ersten Teilbereich und einen zweiten Teilbereich nicht basierend auf der zeitlichen Reihenfolge vorgenommen, in der die einzelnen Stellen bei der Verfestigungs-Abtastung abgetastet werden, sondern basierend auf den unterschiedlichen mechanischen Anforderungen, denen unterschiedliche Regionen im herzustellenden Objekt genügen müssen. Fig. 5 zeigt diesbezüglich eine Draufsicht auf einen zu verfestigenden Querschnitt 60 eines beispielhaften Objekts. Dabei wird beispielhaft angenommen, dass alle Querschnitte des Objekts die gleiche Gestalt haben und im Objekt ohne gegenseitigen Versatz übereinander liegen.

Man erkennt in Fig. 5 unmittelbar, dass an der Engstelle des dargestellten Querschnitts 60, also dort, wo in der Figur der Querschnitt die geringste horizontale Ausdehnung aufweist, die größte mechanische Belastung (z.B. infolge von Hebelkräften) auftreten wird. Aus diesem Grund wird bei dem zweiten Ausführungsbeispiel der zu verfestigende Bereich in einen ersten Teilbereich 601a und einen zweiten, durch eine horizontale Schraffur gekennzeichneten, Teilbereich 601b aufgeteilt. Unterschiedlich zum ersten Teilbereich 601a erfolgt im zweiten Teilbereich 601b eine wiederholte Abtastung des Aufbaumaterials mit einem oder mehreren Strahlbündeln. Dadurch kann gerade in jenem Teil des Objektquerschnitts für eine hohe strukturelle Festigkeit des verfestigten Aufbaumaterials gesorgt werden, in dem die größte mechanische Belastung am fertiggestellten Objekt auftreten wird.

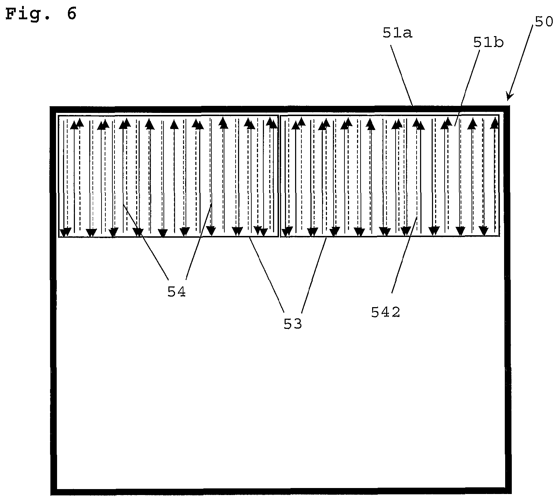

Fig. 6 veranschaulicht ein drittes Ausführungsbeispiel der Erfindung und zeigt zur Veranschaulichung nochmals den beispielhaften Objektquerschnitt von Fig. 2. Aus Gründen der besseren Darstellbarkeit sind auch in Fig. 6 nicht alle Abtastbereiche 53, sondern lediglich zwei gezeigt. Unterschiedlich zu dem Beispiel von Fig. 2 wird beim dritten Ausführungsbeispiel in Fig. 6 der zu verfestigende Bereich in einen ersten Teilbereich 51a, der die Kontur des Objektquerschnitts umfasst, und einen zweiten Teilbereich 51b, der das Innere des Objektquerschnitts umfasst, unterteilt. Im Innern des Objektquerschnitts wird eine höhere strukturelle Festigkeit angestrebt als im Konturbereich, der einen Rand des fertiggestellten Objekts bilden wird. Darüberhinaus muss im Konturbereich darauf geachtet werden, dass nicht unverfestigtes Aufbaumaterial außerhalb des Objektquerschnitts durch den Energieeintrag im Konturbereich mit aufgeschmolzen wird und ungewollt außen am Rand des fertiggestellten Objekts anhaftet. Mit anderen Worten, im Konturbereich sollte der Energieeintrag durch die Strahlung nicht zu hoch sein.

Beim dritten Ausführungsbeispiel wird daher zunächst eine Verfestigungs-Abtastung des ersten und zweiten Teilbereichs 51a und 51b durchgeführt, bei der die dem Aufbaumaterial zugeführte Energie begrenzt ist, um sicherzustellen, dass möglichst wenig Aufbaumaterial außerhalb des Objektquerschnitts mit aufgeschmolzen wird. Anschließend wird eine Wiederholungs-Abtastung des mit dem Objektquerschnittsinnern identischen zweiten Teilbereichs 51b durchgeführt, um in diesem Teilbereich für eine erhöhte strukturelle Festigkeit zu sorgen. **In** Fig. 6 ist diese Wiederholungs-Abtastung durch gestrichelte Hatchlinien 542 veranschaulicht.

Abschließend sei noch erwähnt, dass eine erfindungsgemäße Vorrichtung 100 zur Bereitstellung von Steuerdaten für eine additive Herstellvorrichtung nicht nur allein durch Softwarekomponenten, sondern auch allein durch Hardware-Komponenten oder Mischungen aus Hard- und Software realisiert sein kann. **In** der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die eingespeisten bzw. ausgegebenen Daten von bereits auf dem gleichen Gerät realisierten anderen Komponenten übernommen werden können, oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine additive Herstellvorrichtung zur Herstellung einer Anzahl von dreidimensionalen Objekten, wobei die Objekte mittels der additiven Fertigungsvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet,
wobei das Verfahren zur Bereitstellung von Steuerdaten aufweist:
einen ersten Schritt (S1) des Zugriffs auf computerbasierte Modelldaten einer Anzahl von Abschnitten der Anzahl von herzustellenden Objekten,
einen zweiten Schritt (S2), in dem eine Anzahl von Datenmodellen generiert wird, in denen jeweils für eine Aufbaumaterialschicht ein während der Herstellung der Anzahl von Abschnitten zu verfestigender Bereich (51) der Aufbaumaterialschicht spezifiziert ist,
wobei der zu verfestigende Bereich (51) in einen ersten Teilbereich (51a) und einen zweiten Teilbereich (51b) unterteilt ist,
wobei in einem Datenmodell jeweils eine das Aufbaumaterial verfestigende Verfestigungs-Abtastung der Stellen in dem zu verfestigenden Bereich (51) mittels der Energieeintragseinrichtung spezifiziert ist und an den Stellen des zweiten Teilbereichs (51b), nicht aber an den Stellen des ersten Teilbereichs (51a), eine Wiederholungs-Abtastung mit zumindest einem Strahlbündel spezifiziert ist, wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt, und
einen dritten Schritt (S3), in dem im zweiten Schritt (S2) generierte Datenmodelle als Steuerdaten für die Integration in einen Steuerdatensatz der additiven Herstellvorrichtung bereitgestellt werden.

2. Verfahren nach Anspruch 1, bei dem in dem Steuerdatensatz für mindestens eine Aufbaumaterialschicht eine vom Aufbaumaterial abhängige, Wartezeit spezifiziert ist, die nach der Abtastung aller in dem zugehörigen Datenmodell spezifizierten Stellen in dem zu verfestigenden Bereich (51) abgewartet wird, bevor die Materialauftragseinrichtung zum Auftrag einer weiteren Aufbaumaterialschicht angesteuert wird.

3. Verfahren nach Anspruch 2, bei dem im zweiten Schritt (S2) die Unterteilung in einen ersten Teilbereich (51a) und einen zweiten Teilbereich (51b) so erfolgt, dass der zweite Teilbereich (51b) all jene zu verfestigenden Stellen enthält, an denen eine Zeitdifferenz zwischen dem Zeitpunkt der Verfestigungs-Abtastung der jeweiligen Stelle und dem Ende der Wartezeit eine Minimalzeit unterschreitet.

4. Verfahren nach einem der Ansprüche 1 bis 3, bei dem im zweiten Schritt die Unterteilung des zu verfestigenden Bereichs (51) in einen ersten Teilbereich (51a) und einen zweiten Teilbereich (51b) dergestalt erfolgt, dass bei der Verfestigungs-Abtastung Stellen in dem zweiten Teilbereich (51b) zeitlich nach Stellen in dem ersten Teilbereich (51a) abgetastet werden.

5. Verfahren nach einem der vorangehenden Ansprüche, bei dem die Energieeintragsparameter bei der Wiederholungs-Abtastung so bemessen sind, dass der Energieeintrag pro Flächeneinheit mehr als 25% des Energieeintrags pro Flächeneinheit bei der Verfestigungs-Abtastung beträgt.

6. Verfahren nach einem der vorangehenden Ansprüche, bei dem für die Wiederholungs-Abtastung eine höhere Abtastgeschwindigkeit bei der Bewegung des zumindest einen Strahlbündels über das Aufbaumaterial spezifiziert ist als bei der Verfestigungs-Abtastung.

7. Verfahren nach einem der vorangehenden Ansprüche, bei dem im zweiten Schritt in mindestens einem Datenmodell der erste Teilbereich (51a) so gewählt wird, dass er auf einer Kontur eines Objektquerschnitts liegt.

8. Verfahren nach einem der vorangehenden Ansprüche, bei dem im zweiten Schritt (S2) der zweite Teilbereich (51b) so festgelegt wird, dass er innerhalb eines vorgegebenen ausgezeichneten Abschnitts eines Objekts liegt, für den ein Mindestwert für einen mechanischen Parameter vorgegeben sind.

9. Additives Herstellverfahren zur Herstellung einer Anzahl von dreidimensionalen Objekten, wobei die Objekte hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet,
wobei der Ablauf des additiven Herstellverfahrens durch einen Steuerdatensatz gesteuert wird, in den die nach einem Verfahren nach einem der Ansprüche 1 bis 8 bereitgestellten Steuerdaten integriert wurden.

10. Vorrichtung zur Bereitstellung von Steuerdaten für eine additive Herstellvorrichtung zur Herstellung einer Anzahl von dreidimensionalen Objekten, wobei die Objekte mittels der additiven Herstellvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet,
wobei die Vorrichtung zur Bereitstellung von Steuerdaten aufweist:
eine Datenzugriffseinheit (101), die ausgelegt ist zum Zugriff auf computerbasierte Modelldaten einer Anzahl von Abschnitten der Anzahl von herzustellenden Objekten,
eine Datenmodell-Generierungseinheit (102), die ausgelegt ist,
eine Anzahl von Datenmodellen zu generieren , in denen jeweils für eine Aufbaumaterialschicht ein während der Herstellung der Anzahl von Abschnitten zu verfestigender Bereich (51) der jeweiligen Aufbaumaterialschicht spezifiziert ist,
wobei der zu verfestigende Bereich (51) in einen ersten Teilbereich (51a) und einen zweiten Teilbereich (51b) unterteilt ist,
wobei in einem Datenmodell jeweils eine das Aufbaumaterial verfestigende Verfestigungs-Abtastung der Stellen in dem zu verfestigenden Bereich (51) mittels der Energieeintragseinrichtung spezifiziert ist und an den Stellen des zweiten Teilbereichs (51b), nicht aber an den Stellen des ersten Teilbereichs (51a), eine Wiederholungs-Abtastung mit zumindest einem Strahlbündel spezifiziert ist, wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, bevorzugt innerhalb des Schmelzintervalls des Aufbaumaterials liegt, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt, und
eine Steuerdaten--Bereitstellungseinheit (103), die ausgelegt ist, von der Datenmodell-Generierungseinheit (102) generierte Datenmodelle als Steuerdaten für die Integration in einen Steuerdatensatz der additiven Herstellvorrichtung bereit zu stellen.

11. Vorrichtung zur computergestützten Ansteuerung einer Energieeintragseinrichtung einer additiven Herstellvorrichtung zur Herstellung einer Anzahl von dreidimensionalen Objekten mittels derselben,
wobei die Objekte mittels der additiven Herstellvorrichtung hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet,
wobei die Vorrichtung so ausgelegt ist, dass
für eine Anzahl von Aufbaumaterialschichten jeweils ein während der Herstellung einer Anzahl von Abschnitten der Anzahl von Objekten zu verfestigender Bereich (51) der Aufbaumaterialschicht spezifiziert ist,
wobei der zu verfestigende Bereich (51) in einen ersten Teilbereich (51a) und einen zweiten Teilbereich (51b) unterteilt ist,
wobei jeweils eine das Aufbaumaterial verfestigende Verfestigungs-Abtastung der Stellen in dem zu verfestigenden Bereich (51) mittels der Energieeintragseinrichtung spezifiziert ist und an den Stellen des zweiten Teilbereichs (51b), nicht aber an den Stellen des ersten Teilbereichs (51a), eine Wiederholungs-Abtastung mit zumindest einem Strahlbündel spezifiziert ist,
wobei die Energieeintragsparameter bei der Wiederholungs-Abtastung so bemessen sind, dass die Temperatur des Aufbaumaterials innerhalb des Auftreffbereichs des Strahlbündels auf dem Aufbaumaterial oberhalb einer Schmelztemperatur des Aufbaumaterials liegt, bevorzugt innerhalb des Schmelzintervalls des Aufbaumaterials liegt, und wobei die Energieeintragsparameter bei der Wiederholungs-Abtastung so bemessen sind, dass der Energieeintrag pro Flächeneinheit weniger als 60% des Energieeintrags pro Flächeneinheit bei der Verfestigungs-Abtastung beträgt.

12. Additive Herstellvorrichtung zur Herstellung einer Anzahl von dreidimensionalen Objekten, wobei in der additiven Herstellvorrichtung die Objekte hergestellt werden durch Aufbringen eines kunststoffhaltigen Aufbaumaterials Schicht auf Schicht mittels einer Materialauftragseinrichtung und Verfestigen des Aufbaumaterials mittels Zufuhr von Strahlungsenergie zu Stellen in jeder Schicht, die den Querschnitten der Objekte in dieser Schicht zugeordnet sind, indem eine Energieeintragseinrichtung zum Eintragen von Energie in das Aufbaumaterial diese Stellen mit mindestens einem Strahlbündel gemäß einem Satz von Energieeintragsparametern abtastet, wobei die additive Herstellvorrichtung aufweist:
eine Materialauftragseinrichtung, die geeignet ist, eine Schicht eines Aufbaumaterials auf eine bereits vorhandene, Aufbaumaterialschicht aufzubringen, und
eine Energieeintragseinrichtung, die geeignet ist, die dem Querschnitt des Objekts in einer Schicht zugeordneten Stellen mit mindestens einem Strahlbündel abzutasten,
wobei die additive Herstellvorrichtung eine Vorrichtung nach Anspruch 11 aufweist und/oder mit einer Vorrichtung nach Anspruch 11 signaltechnisch verbunden ist.

13. Additive Herstellvorrichtung nach Anspruch 12, weiterhin aufweisend eine Temperiervorrichtung, die ausgelegt ist, bereits mit einem Strahlbündel abgetastetes Aufbaumaterial auf einer Temperatur zu halten, die oberhalb einer Schmelztemperatur des Aufbaumaterials liegt.

14. Additive Herstellvorrichtung nach Anspruch 13, wobei die Temperiervorrichtung eine Strahlungsheizung ist .

15. Computerprogramm, mit Programmcodemitteln, um alle Schritte eines Verfahrens gemäß einem der Ansprüche 1 bis 9 auszuführen, wenn das Computerprogramm mittels eines Datenprozessors ausgeführt wird.

## Claims

1. A computer-based method of providing control data for an additive manufacturing apparatus for manufacturing a number of three-dimensional objects, wherein by means of the additive manufacturing apparatus the objects are manufactured by applying a building material containing plastic layer by layer by means of a material application unit and by solidifying the building material by supplying radiation energy to positions in each layer that are assigned to the cross-sections of the objects in this layer by scanning these positions by means of an energy input unit with at least one beam for inputting energy into the building material in accordance with a set of energy input parameters,
the method of providing control data comprising:
a first step (S1) of accessing computer-based model data of a number of portions of the number of objects to be manufactured,
a second step (S2), in which a number of data models is generated, each of said number of data models specifying for a building material layer a region (51) to be solidified of said building material layer during the manufacturing of the number of portions,
wherein the region (51) to be solidified is divided into a first partial region (51a) and a second partial region (51b),
wherein in each data model a solidification scanning, which solidifies the building material, of the positions in the region (51) to be solidified by means of the energy input unit is specified and at the positions of the second partial region (51b), however not at the positions of the first partial region (51a), a repetition scanning with at least one beam is specified, wherein for the repetition scanning the energy input parameters are set such that the temperature of the building material within the area of incidence of the beam on the building material lies above of a melting point of the building material, and wherein for the repetition scanning the energy input parameters are set such that the energy input per unit area is less than 60% of the energy input per unit area in the solidification scanning, and
a third step (S3) in which the data models generated in the second step (S2) are provided as control data for the integration into a control data set for the additive manufacturing apparatus.

2. The method according to claim 1, wherein in the control data set for at least one building material layer a waiting time depending on the building material is specified, wherein after the scanning of all positions in the region (51) to be solidified that are specified in the data model, it is waited for the waiting time to pass, before the material application unit is driven to apply a further building material layer.

3. The method according to claim 2, wherein in the second step (S2) the division into a first partial region (51a) and a second partial region (51b) is made such that the second partial region (51b) comprises all the positions to be solidified at which a temporal difference between the time of the solidification scanning of the respective position and the end of the waiting time is lower than a minimum time.

4. The method according to one of claims 1 to 3, wherein in the second step the division of the region (51) to be solidified into a first partial region (51a) and a second partial region (51b) is made such that in the solidification scanning positions in the second partial region (51b) are scanned later in time than positions in the first partial region (51a).

5. The method according to one of the preceding claims, wherein the energy input parameters in the repetition scanning are set such that the energy input per unit area is more than 25% of the energy input per unit area in the solidification scanning.

6. The method according to one of the preceding claims, wherein for the movement of the at least one beam across the building material in the repetition scanning, a higher scan velocity is specified than in the solidification scanning.

7. The method according to one of the preceding claims, wherein in the second step in at least one data model the first partial region (51a) is selected such that it is located on a contour of an object cross-section.

8. The method according to one of the preceding claims, wherein in the second step (S2), the second partial region (51b) is defined such that it lies inside of a predefined distinguished portion of an object for which a minimum value of a mechanical parameter is specified.

9. An additive manufacturing method for manufacturing a number of three-dimensional objects, wherein the objects are manufactured by applying a building material containing plastic layer by layer by means of a material application unit and by solidifying the building material by supplying radiation energy to positions in each layer that are assigned to the cross-sections of the objects in this layer by scanning these positions by means of an energy input unit with at least one beam for inputting energy into the building material in accordance with a set of energy input parameters,
wherein the process of the additive manufacturing method is controlled by a control data set into which the control data provided by a method according to one of claims 1 to 8 were integrated.

10. A device for providing control data for an additive manufacturing apparatus for manufacturing a number of three-dimensional objects, wherein by means of the additive manufacturing apparatus the objects are manufactured by applying a building material containing plastic layer by layer by means of a material application unit and by solidifying the building material by supplying radiation energy to positions in each layer that are assigned to the cross-sections of the objects in this layer by scanning these positions by means of an energy input unit with at least one beam for inputting energy into the building material in accordance with a set of energy input parameters, the device for providing control data comprising:
a data access unit (101) adapted to access computer-based model data of a number of portions of the number of objects to be manufactured,
a data model generation unit (102) adapted to generate a number of data models, each of the same specifying for a building material layer a region (51) to be solidified of the respective building material layer during the manufacturing of the number of portions,
wherein the region (51) to be solidified is divided into a first partial region (51a) and a second partial region (51b),
wherein in each data model a solidification scanning, which solidifies the building material, of the positions in the region (51) to be solidified by means of the energy input unit is specified and at the positions of the second partial region (51b), however not at the positions of the first partial region (51a), a repetition scanning with at least one beam is specified, wherein for the repetition scanning the energy input parameters are set such that the temperature of the building material within the area of incidence of the beam on the building material lies above of a melting point of the building material, preferably inside of the melting interval of the building material, and wherein for the repetition scanning the energy input parameters are set such that the energy input per unit area is less than 60% of the energy input per unit area in the solidification scanning, and
a control data provision unit (103) adapted to provide data models generated by the data model generation unit (102) as control data for the integration into a control data set of the additive manufacturing apparatus.

11. A device for a computer-based control of an energy input unit of an additive manufacturing apparatus for the manufacturing of a number of three-dimensional objects by means of the latter,
wherein by means of the additive manufacturing apparatus the objects are manufactured by applying a building material containing plastic layer by layer by means of a material application unit and by solidifying the building material by supplying radiation energy to positions in each layer that are assigned to the cross-sections of the objects in this layer by scanning these positions by means of an energy input unit with at least one beam for inputting energy into the building material in accordance with a set of energy input parameters,
wherein the device is adapted to:
specify for each of a number of building material layers a region (51) to be solidified of the building material layer during the manufacturing of a number of portions of the number of objects,
wherein the region to be solidified (51) is divided into a first partial region (51a) and a second partial region (51b),
wherein in each case, a solidification scanning, which solidifies the building material, of the positions in the region (51) to be solidified by means of the energy input unit is specified and at the positions of the second partial region (51b), however not at the positions of the first partial region (51a), a repetition scanning with at least one beam is specified,
wherein for the repetition scanning the energy input parameters are set such that the temperature of the building material within the area of incidence of the beam on the building material lies above of a melting point of the building material, preferably inside of the melting interval of the building material, and wherein for the repetition scanning the energy input parameters are set such that the energy input per unit area is less than 60% of the energy input per unit area in the solidification scanning.

12. An additive manufacturing apparatus for the manufacturing of a number of three-dimensional objects, wherein in the additive manufacturing apparatus the objects are manufactured by applying a building material containing plastic layer by layer by means of a material application unit and by solidifying the building material by supplying radiation energy to positions in each layer that are assigned to the cross-sections of the objects in this layer by scanning these positions by means of an energy input unit with at least one beam for inputting energy into the building material in accordance with a set of energy input parameters, wherein the additive manufacturing apparatus comprises:
a material application unit adapted to apply a layer of a building material onto an already existing building material layer and
an energy input unit adapted to scan by means of at least one beam positions assigned to the cross-section of the object in a layer,
wherein the additive manufacturing apparatus comprises a device according to claim 11 and/or is connected in signal terms to a device according to claim 11.

13. The additive manufacturing apparatus according to claim 12, further comprising a temperature control device adapted to maintain building material that has already been scanned by a beam at a temperature above of a melting point of the building material.

14. The additive manufacturing apparatus according to claim 13, wherein the temperature control device is a radiant heater.

15. Computer program having program code means for executing all the steps of a method according to one of claims 1 to 9 when the computer program is executed by means of a data processor.

## Revendications

1. Procédé assisté par ordinateur pour fournir des données de commande pour un dispositif de fabrication additive pour fabriquer un certain nombre d'objets tridimensionnels, dans lequel les objets sont fabriqués au moyen du dispositif de fabrication additive en appliquant un matériau de construction contenant une matière plastique couche par couche au moyen d'un dispositif d'application de matériau et en solidifiant le matériau de construction en fournissant de l'énergie de rayonnement à des emplacements dans chaque couche qui sont associés aux sections transversales des objets dans cette couche, en ce qu'un dispositif d'introduction d'énergie pour introduire de l'énergie dans le matériau de construction balaye ces emplacements avec au moins un faisceau de rayonnement selon un ensemble de paramètres d'introduction d'énergie,
dans lequel le procédé pour fournir des données de commande comprend :
une première étape (S1) d'accès à des données de modèle basées sur ordinateur d'un certain nombre de sections du nombre d'objets à fabriquer,
une deuxième étape (S2), dans laquelle un certain nombre de modèles de données est généré, dans lesquels une zone (51) à solidifier pendant la fabrication du nombre de sections de la couche de matériau de construction est spécifiée à chaque fois pour une couche de matériau de construction,
dans lequel la zone à solidifier (51) est divisée en une première zone partielle (51a) et une deuxième zone partielle (51b),
dans lequel un balayage de solidification des emplacements dans la zone à solidifier (51) solidifiant le matériau de construction est spécifié à chaque fois dans un modèle de données au moyen du dispositif d'introduction d'énergie et un balayage de répétition avec au moins un faisceau de rayonnement est spécifié aux emplacements de la deuxième zone partielle (51b), mais pas aux emplacements de la première zone partielle (51a), dans lequel les paramètres d'introduction d'énergie sont dimensionnés lors du balayage de répétition de telle sorte que la température du matériau de construction à l'intérieur de la zone d'impact du faisceau de rayonnement sur le matériau de construction soit supérieure à une température de fusion du matériau de construction, et dans lequel les paramètres d'introduction d'énergie sont dimensionnés lors du balayage de répétition de telle sorte que l'introduction d'énergie par unité de surface soit inférieure à 60 % de l'introduction d'énergie par unité de surface lors du balayage de solidification, et
une troisième étape (S3), dans laquelle des modèles de données générés dans la deuxième étape (S2) sont fournis en tant que données de commande pour l'intégration dans un ensemble de données de commande du dispositif de fabrication additive.

2. Procédé selon la revendication 1, dans lequel un temps d'attente dépendant du matériau de construction est spécifié dans l'ensemble de données de commande pour au moins une couche de matériau de construction, lequel temps d'attente est attendu après le balayage de tous les emplacements spécifiés dans le modèle de données associé dans la zone à solidifier (51), avant que le dispositif d'application de matériau ne soit commandé pour l'application d'une autre couche de matériau de construction.

3. Procédé selon la revendication 2, dans lequel la division en une première zone partielle (51a) et une deuxième zone partielle (51b) a lieu dans la deuxième étape (S2) de telle sorte que la deuxième zone partielle (51b) contienne tous les emplacements à solidifier auxquels une différence de temps entre l'instant du balayage de solidification de l'emplacement respectif et la fin du temps d'attente devient inférieure à un temps minimal.

4. Procédé selon l'une quelconque des revendications 1 à 3, dans lequel la division de la zone à solidifier (51) en une première zone partielle (51a) et une deuxième zone partielle (51b) a lieu dans la deuxième étape de telle sorte que des emplacements dans la deuxième zone partielle (51b) soient balayés dans le temps après des emplacements dans la première zone partielle (51a) lors du balayage de solidification.

5. Procédé selon l'une quelconque des revendications précédentes, dans lequel les paramètres d'introduction d'énergie sont dimensionnés lors du balayage de répétition de telle sorte que l'introduction d'énergie par unité de surface soit supérieure à 25 % de l'introduction d'énergie par unité de surface lors du balayage de solidification.

6. Procédé selon l'une quelconque des revendications précédentes, dans lequel une vitesse de balayage plus élevée lors du déplacement de l'au moins un faisceau de rayonnement à travers le matériau de construction est spécifiée pour le balayage de répétition que lors du balayage de solidification.

7. Procédé selon l'une quelconque des revendications précédentes, dans lequel la première zone partielle (51a) est choisie dans au moins un modèle de données dans la deuxième étape de telle sorte qu'elle se trouve sur un contour d'une section transversale d'objet.

8. Procédé selon l'une quelconque des revendications précédentes, dans lequel la deuxième zone partielle (51b) est définie dans la deuxième étape (S2) de telle sorte qu'elle se trouve à l'intérieur d'une section caractéristique prédéfinie d'un objet pour lequel une valeur minimale pour un paramètre mécanique est prédéfinie.

9. Procédé de fabrication additive pour fabriquer un certain nombre d'objets tridimensionnels, dans lequel les objets sont fabriqués en appliquant un matériau de construction contenant une matière plastique couche par couche au moyen d'un dispositif d'application de matériau et en solidifiant le matériau de construction en fournissant de l'énergie de rayonnement à des emplacements dans chaque couche qui sont associés aux sections transversales des objets dans cette couche, en ce qu'un dispositif d'introduction d'énergie pour introduire de l'énergie dans le matériau de construction balaye ces emplacements avec au moins un faisceau de rayonnement selon un ensemble de paramètres d'introduction d'énergie,
dans lequel le déroulement du procédé de fabrication additive est commandé par un ensemble de données de commande dans lequel les données de commande fournies selon un procédé selon l'une quelconque des revendications 1 à 8 ont été intégrées.

10. Dispositif pour fournir des données de commande pour un dispositif de fabrication additive pour fabriquer un certain nombre d'objets tridimensionnels, dans lequel les objets sont fabriqués au moyen du dispositif de fabrication additive en appliquant un matériau de construction contenant une matière plastique couche par couche au moyen d'un dispositif d'application de matériau et en solidifiant le matériau de construction en fournissant de l'énergie de rayonnement à des emplacements dans chaque couche qui sont associés aux sections transversales des objets dans cette couche, en ce qu'un dispositif d'introduction d'énergie pour introduire de l'énergie dans le matériau de construction balaye ces emplacements avec au moins un faisceau de rayonnement selon un ensemble de paramètres d'introduction d'énergie,
dans lequel le dispositif pour fournir des données de commande comprend :
une unité d'accès de données (101) qui est conçue pour accéder à des données de modèle basées sur ordinateur d'un certain nombre de sections du nombre d'objets à fabriquer,
une unité de génération de modèle de données (102) qui est conçue pour générer un certain nombre de modèles de données, dans lesquels une zone (51) à solidifier pendant la fabrication du nombre de sections de la couche de matériau de construction respective est spécifiée à chaque fois pour une couche de matériau de construction,
dans lequel la zone à solidifier (51) est divisée en une première zone partielle (51a) et une deuxième zone partielle (51b),
dans lequel un balayage de solidification des emplacements dans la zone à solidifier (51) solidifiant le matériau de construction est spécifié à chaque fois dans un modèle de données au moyen du dispositif d'introduction d'énergie et un balayage de répétition avec au moins un faisceau de rayonnement est spécifié aux emplacements de la deuxième zone partielle (51b), mais pas aux emplacements de la première zone partielle (51a), dans lequel les paramètres d'introduction d'énergie sont dimensionnés lors du balayage de répétition de telle sorte que la température du matériau de construction à l'intérieur de la zone d'impact du faisceau de rayonnement sur le matériau de construction soit supérieure à une température de fusion du matériau de construction, de préférence à l'intérieur de l'intervalle de fusion du matériau de construction, et dans lequel les paramètres d'introduction d'énergie sont dimensionnés lors du balayage de répétition de telle sorte que l'introduction d'énergie par unité de surface soit inférieure à 60 % de l'introduction d'énergie par unité de surface lors du balayage de solidification, et
une unité de fourniture de données de commande (103) qui est conçue pour fournir des modèles de données générés par l'unité de génération de modèle de données (102) en tant que données de commande pour l'intégration dans un ensemble de données de commande du dispositif de fabrication additive.

11. Dispositif pour la commande assistée par ordinateur d'un dispositif d'introduction d'énergie d'un dispositif de fabrication additive pour fabriquer un certain nombre d'objets tridimensionnels au moyen de celui-ci,
dans lequel les objets sont fabriqués au moyen du dispositif de fabrication additive en appliquant un matériau de construction contenant une matière plastique couche par couche au moyen d'un dispositif d'application de matériau et en solidifiant le matériau de construction en fournissant de l'énergie de rayonnement à des emplacements dans chaque couche qui sont associés aux sections transversales des objets dans cette couche, en ce qu'un dispositif d'introduction d'énergie pour introduire de l'énergie dans le matériau de construction balaye ces emplacements avec au moins un faisceau de rayonnement selon un ensemble de paramètres d'introduction d'énergie,
dans lequel le dispositif est conçu de telle sorte que
une zone (51) à solidifier pendant la fabrication d'un certain nombre de sections du nombre d'objets de la couche de matériau de construction est spécifiée à chaque fois pour un certain nombre de couches de matériau de construction,
dans lequel la zone à solidifier (51) est divisée en une première zone partielle (51a) et une deuxième zone partielle (51b),
dans lequel un balayage de solidification des emplacements dans la zone à solidifier (51) solidifiant le matériau de construction est spécifié à chaque fois au moyen du dispositif d'introduction d'énergie et un balayage de répétition avec au moins un faisceau de rayonnement est spécifié aux emplacements de la deuxième zone partielle (51b), mais pas aux emplacements de la première zone partielle (51a),
dans lequel les paramètres d'introduction d'énergie sont dimensionnés lors du balayage de répétition de telle sorte que la température du matériau de construction à l'intérieur de la zone d'impact du faisceau de rayonnement sur le matériau de construction soit supérieure à une température de fusion du matériau de construction, de préférence à l'intérieur de l'intervalle de fusion du matériau de construction, et dans lequel les paramètres d'introduction d'énergie sont dimensionnés lors du balayage de répétition de telle sorte que l'introduction d'énergie par unité de surface soit inférieure à 60 % de l'introduction d'énergie par unité de surface lors du balayage de solidification.

12. Dispositif de fabrication additive pour fabriquer un certain nombre d'objets tridimensionnels, dans lequel les objets sont fabriqués dans le dispositif de fabrication additive en appliquant un matériau de construction contenant une matière plastique couche par couche au moyen d'un dispositif d'application de matériau et en solidifiant le matériau de construction en fournissant de l'énergie de rayonnement à des emplacements dans chaque couche qui sont associés aux sections transversales des objets dans cette couche, en ce qu'un dispositif d'introduction d'énergie pour introduire de l'énergie dans le matériau de construction balaye ces emplacements avec au moins un faisceau de rayonnement selon un ensemble de paramètres d'introduction d'énergie, dans lequel le dispositif de fabrication additive comporte:
un dispositif d'application de matériau qui est approprié pour appliquer une couche d'un matériau de construction sur une couche de matériau de construction déjà présente, et
un dispositif d'introduction d'énergie qui est approprié pour balayer les emplacements associés à la section transversale de l'objet dans une couche avec au moins un faisceau de rayonnement,
dans lequel le dispositif de fabrication additive comporte un dispositif selon la revendication 11 et/ou est relié par une technique de signalisation à un dispositif selon la revendication 11.

13. Dispositif de fabrication additive selon la revendication 12, comportant en outre un dispositif de régulation de température qui est conçu pour maintenir un matériau de construction déjà balayé avec un faisceau de rayonnement à une température qui est supérieure à une température de fusion du matériau de construction.

14. Dispositif de fabrication additive selon la revendication 13, dans lequel le dispositif de régulation de température est un chauffage par rayonnement.

15. Programme informatique, comportant des moyens de code de programme pour exécuter toutes les étapes d'un procédé selon l'une quelconque des revendications 1 à 9 lorsque le programme informatique est exécuté au moyen d'un processeur de données.
